# EUROPEAN PATENT APPLICATION

(11) **EP 4 825 533 A1**
(43) Date of publication of application: **21.10.2026**
(21) Application number: 26172485.0
(22) Date of filing: 15.04.2026
(51) Int. Cl.: B25F 5/02, B25B 21/00

(54) **WIRELESS COMMUNICATION ASSEMBLY FOR POWER TOOL**

(30) Priority: 18.04.2025 US 202563790819 P
(71) Applicant: Black & Decker, Inc., New Britain, CT 06053 (US)
(72) Inventor: VALENTINE, Alastair G., New Britain, 06053 (US); McMULLEN, Hugh F., New Britain, 06053 (US); COATES, Marcell E., New Britain, 06053 (US); SIKORA, Michael P., New Britain, 06053 (US); CHILDERS, Justin T., New Britain, 06053 (US); BOURRET, Anthony Y., New Britian, 06053 (US)
(74) Representative: SBD IPAdmin

(57) **Abstract**

A wireless communication assembly for a power tool may include a wireless communication module and/or a power source assembly for providing a supply of electric power to the wireless communication module. The wireless communication module may include a printed circuit board (PCB), wireless communication circuitry on the PCB, and/or a first connector on the PCB. The first connector may include a pair of electrical contacts that is electrically coupled to the wireless communication circuitry. The power source assembly may be electrically coupled to the pair of electrical contacts of the first connector via a pair of wires.

## Description

This disclosure relates generally to a wireless communication assembly and, in some non-limiting embodiments or aspects, to a wireless communication assembly for a power tool.

At a construction site, many different types of power tools may be used at various times. Cordless power tools at the construction site may draw power from a rechargeable power source (such as a rechargeable battery pack) and provide flexibility for maneuvering around the construction site. Since not all power tools may be in use at the same time, a battery pack may be removed from one power tool and added to another depending on the need at the time. Similarly, it may be desirable to include a fleet of battery packs that are interchangeable and where each can be used in many different power tools at the construction site. Moreover, to better optimize the use of all of the power tools at a construction site, it may be desirable to monitor and record various data metrics of power tools and battery packs to determine how each is performing and how they are used. In addition, in certain situations, it may be beneficial to have wireless communications between a power tool, or battery pack, and one or more computing devices to facilitate this type of coordination.

### SUMMARY

According to some non-limiting embodiments or aspects, provided is a power tool including: a main housing; an electric motor in the main housing; a handle housing that extends from the main housing, wherein the handle housing includes a first handle portion that extends from a first end of the main housing, a second handle portion that extends from a second end of the main housing opposite the first end of the main housing, and a third handle portion that connects ends of the first handle portion and the second handle portion; and a wireless communication assembly including: a wireless communication module that includes a printed circuit board (PCB), wireless communication circuitry on the PCB, and a first connector on the PCB, wherein the first connector includes a pair of electrical contacts that is electrically coupled to the wireless communication circuitry; and a power source assembly for providing a supply of electric power to the wireless communication module, wherein the power source assembly is electrically coupled to the pair of electrical contacts of the first connector via a pair of wires, and wherein the wireless communication assembly is disposed in the handle housing.

In some non-limiting embodiments or aspects, the second handle portion has a first cross-sectional area proximate the tool housing and a second cross-sectional area proximate the third handle portion, wherein the first cross-sectional area is greater than the second cross-sectional area, and wherein each of the wireless communication module and the power source assembly is disposed in the first cross-sectional area of the second handle portion.

In some non-limiting embodiments or aspects, the handle housing including each of the first handle portion, the second handle portion, and the third handle portion includes a first housing portion and a second housing portion that are connected together along a mating plane to define an interior of the handle housing that includes the first cross-sectional area and the second cross-section area of the second handle portion, wherein the wireless communication module is disposed in the first cross-sectional area of the second handle portion proximate a location of the second handle portion at which the interior of the second handle portion decreases from the first cross-sectional area to the second cross-sectional area, wherein the power source assembly is disposed in the first cross-sectional area of the second handle portion proximate an end of the second handle portion that is connected to the main housing, wherein the wireless communication module is located along a first plane within the second handle portion that is substantially orthogonal to the mating plane of the first housing portion and the second housing portion of the second handle portion, wherein the power source assembly is located along a second plane within the second handle portion that is substantially orthogonal to the mating plane of the first housing portion and the second housing portion of the second handle portion, and wherein the first plane is offset relative to the second plane.

In some non-limiting embodiments or aspects, the first handle portion extends longitudinally from the main housing, wherein the third handle portion extends at an angle less than 90 degrees from an end of the first handle portion back towards the main housing, wherein the second handle portion connects the third handle portion to the main housing,
wherein the wireless communication module is disposed in the second handle portion, and wherein the power source assembly is disposed in the third handle portion.

In some non-limiting embodiments or aspects, the handle housing including each of the first handle portion, the second handle portion, and the third handle portion includes a first housing portion and a second housing portion that are connected together along a mating plane to define an interior of the handle housing, wherein the wireless communication module is located along a first plane within the second handle portion that is substantially orthogonal to the mating plane of the first housing portion and the second housing portion of the second handle portion, wherein the power source assembly is located along a second plane within the third handle portion that is substantially orthogonal to the mating plane of the first housing portion and the second housing portion of the third handle portion, wherein the first plane is substantially parallel to a longitudinal axis of the second handle portion, and wherein the second plane is substantially parallel to a longitudinal axis of the third handle portion.

In some non-limiting embodiments or aspects, the third handle portion extends substantially perpendicularly to the first handle portion and the second handle portion, wherein the power source assembly is disposed in the second handle portion adjacent a first wall of the second handle portion, and wherein the wireless communication module is disposed in the second handle portion adjacent a second wall of the second housing portion opposite the first wall.

In some non-limiting embodiments or aspects, the handle housing including each of the first handle portion, the second handle portion, and the third handle portion includes a first housing portion and a second housing portion that are connected together along a mating plane to define an interior of the handle housing, wherein the wireless communication module is located along a first plane within the second handle portion that is substantially orthogonal to the mating plane of the first housing portion and the second housing portion of the second handle portion, wherein the power source assembly is located along a second plane within the second handle portion that is substantially orthogonal to the mating plane of the first housing portion and the second housing portion of the second handle portion, and wherein the first plane is offset relative to the second plane.

In some non-limiting embodiments or aspects, the first plane and the second plane are at an angle of 15 to 30 degrees.

In some non-limiting embodiments or aspects, the power tool further includes: a battery receptacle including a terminal block that engages with a removable battery pack; and a control module for supplying electric power from the removable battery pack to the electric motor, wherein the wireless communication module further includes a second connector on the PCB, wherein the second connector includes a plurality of electrical contacts that is electrically coupled to the wireless communication circuitry, wherein the plurality of electrical contacts of the second connector is electrically coupled to the control module via a wiring harness, and wherein the wireless communication module is configured to selectively receive power from the battery via the first connector or from the control module via the second connector.

In some non-limiting embodiments or aspects, the power tool further includes: a trigger mechanism; a switch module operatively coupled to the trigger mechanism and the control module, wherein the switch module includes a switch that is actuated by the trigger mechanism to provide a signal to the control module to control a supply of electric power from the removable battery pack to the electric motor, and wherein each of the trigger mechanism and the switch module is disposed in the handle housing.

According to some non-limiting embodiments or aspects, provided is a wireless communication assembly including: a wireless communication module including: a printed circuit board (PCB); a wireless communication circuitry on a first surface of the PCB; an electromagnetic interference (EMI) shield on the first surface of the PCB over the wireless communication circuitry; a plastic over-mold that covers the wireless communication circuitry and the EMI shield; a first connector on the first surface of the PCB and including a pair of electrical contacts that is electrically coupled to the wireless communication circuitry; and a second connector on the first surface of the PCB and including a plurality of electrical contacts that is electrically coupled to the wireless communication circuitry.

In some non-limiting embodiments or aspects, the EMI shield includes a cover portion, a sidewall that extends from the cover portion toward the first surface of the PCB, and a plurality of openings in the cover portion, wherein the cover portion and the sidewall of the EMI shield surround and are spaced apart from the wireless communication circuitry, and wherein the plastic over-mold fills in a space between the wireless communication circuitry and the EMI shield.

In some non-limiting embodiments or aspects, the plastic over-mold further covers at least a portion of a second surface of the PCB opposite the first surface of the PCB.

In some non-limiting embodiments or aspects, the first connector and the second connector are mounted to the first surface of the PCB adjacent to each other along a first edge of the PCB, wherein the wireless communication circuitry is mounted to the first surface of the PCB between the first connector and the second connector and a second edge of the PCB opposite the first edge the PCB, and wherein a third edge of the PCB perpendicular to the first edge and the second edge and a fourth edge of the PCB opposite the third edge of the PCB are exposed from the plastic over-mold.

In some non-limiting embodiments or aspects, the wireless communication assembly further includes: a power source assembly including: a power source housing; and a battery including a pair of terminals, wherein the battery is disposed in the power source housing, wherein the power source housing includes an opening that receives first ends of a pair of wires electrically coupled to the pair of terminals of the battery, and wherein second ends of the pair of wires is electrically coupled to a pair of electrical contacts of a complementary first connector connected to the first connector in a complementary manner.

In some non-limiting embodiments or aspects, the power source housing includes an upper power source housing and a lower power source housing, wherein the upper power source housing includes an upper base, an upper sidewall that extends from the upper base, and an upper opening in the upper sidewall, wherein the lower power source housing includes a lower base, a lower sidewall that extends from the lower base, and a lower opening in the lower sidewall, wherein an end of the upper sidewall of the upper power source housing opposite another end connected to the upper base is fixed to or integral with an end of the lower sidewall of the lower power source housing opposite another end connected to the upper base with the upper opening of the upper power source housing aligned with the lower opening of the lower power source housing to form the opening in the power source housing.

In some non-limiting embodiments or aspects, the end of the lower sidewall of the lower power source housing includes a seam extending from the lower sidewall and spaced apart from an outer perimeter of the lower sidewall, wherein, with the end of the upper sidewall of the upper power source housing in contact with the end of the lower sidewall of the lower power source housing, an inner surface of the upper sidewall contacts an outer surface of the seam, and the upper power source housing and the lower power source housing are ultrasonically welded together at the inner surface of the upper sidewall and the outer surface of the seam.

In some non-limiting embodiments or aspects, the upper base of the upper power source housing includes an upper internal recess that extends from the upper opening toward a center of the upper base, wherein the upper internal recess defines a space between an inner surface of the upper base and a first terminal of the battery via which a first end of a first wire of the first ends of the pair of wires is received and electrically coupled to the first terminal of the battery, wherein the lower base of the lower power source housing includes a lower internal recess that extends from the lower opening toward a center of the lower base, wherein the lower internal recess defines a space between the inner surface of the lower base and a second terminal of the battery via which a first end of a second wire of the first ends of the pair of wires is received and electrically coupled to the second terminal of the battery.

In some non-limiting embodiments or aspects, the first end of the first wire includes a first metal tab crimped to the first end of the first wire, wherein the first metal tab is welded to the first terminal of the battery, wherein the first end of the second wire includes a second metal tab crimped to the first end of the second wire, and wherein the second metal tab is welded to the second terminal of the battery.

In some non-limiting embodiments or aspects, the upper base includes: a first channel that extends from an outer surface of the upper base and from the upper opening toward the center of the upper base; and a second channel that extends from the outer surface of the upper base and perpendicular to the first channel, wherein a portion of the second channel between ends of the second channel is connected to an end of the first channel opposite another end of the first channel at the upper opening.

According to some non-limiting embodiments or aspects, provided is a power tool including: a main housing; an electric motor in the main housing; a handle housing that extends from the main housing, wherein the handle housing includes a first housing portion and a second housing portion that are connected together along a mating plane to define an interior of the handle housing; a wireless communication module that includes a printed circuit board (PCB), a wireless communication circuitry on the PCB, and a first connector on the PCB, wherein the first connector includes a pair of electrical contacts that is electrically coupled to the wireless communication circuitry; and a first retention assembly including: one or more first beams that extend from an inner surface of the first housing portion in a first direction; one or more second beams that extend from an inner surface of the second housing portion in a second direction opposite the first direction such that the one or more first beams and the one or more second beams extend toward each other with ends of the one or more first beams spaced apart from ends of the one or more second beams; wherein the one or more first beams extend a first distance from the inner surface of the first housing portion in the first direction, wherein the one or more second beams extend from the inner surface of the second housing portion a second distance different than the first distance in the second direction opposite the first direction, and wherein the wireless communication module is received in the first retention assembly between the one or more first beams and the one or more second beams.

In some non-limiting embodiments or aspects, the power tool further includes: a first abutment that extends from the inner surface of the first housing portion at a first side of the one or more first beams; a second abutment that extends from the inner surface of the first housing portion at a second side opposite the first side of the one or more first beams, wherein the first distance is less than the second distance, and wherein the wireless communication module is received in the first retention assembly between the first abutment and the second abutment.

In some non-limiting embodiments or aspects, ends of the one or more first beams include first notches that are configured for sliding engagement with an edge of the PCB, and wherein ends of the one or more second beams include second notches that are configured for sliding engagement with another edge of the PCB.

In some non-limiting embodiments or aspects, a plane of orientation of the wireless communication module is substantially orthogonal to the mating plane.

In some non-limiting embodiments or aspects, a center axis of the wireless communication module that is parallel to the mating plane is offset relative to the mating plane MP such a portion of the wireless communication module that is within the first housing portion is greater than a portion of the wireless communication module that is within the second housing portion.

In some non-limiting embodiments or aspects, the power tool further includes: a power source assembly for providing a supply of electric power to the wireless communication module, wherein the power source assembly includes a power source housing and a battery disposed in the power source housing, wherein the battery is electrically coupled to the pair of electrical contacts of the first connector via a pair of wires, and wherein a first outer surface of the power source housing includes a first channel that extends from the first outer surface of the power source housing and a second channel that extends from the first outer surface of the power source housing and perpendicular to the first channel, and wherein a portion of the second channel between ends of the second channel is connected to an end of the first channel; and a second retention assembly including: a first retention arm that extends from the inner surface of the first housing over the first outer surface of the power source housing along a side of the second channel; a second retention arm that extends from the inner surface of the first housing and parallel to the first retention arm along an opposite side of the second channel and comes into contact with a first side of the first channel; a third retention arm that extends over a second outer surface of the power source housing opposite the first outer surface; a complementary first retention arm that extends from the inner surface of the second housing over the first outer surface of the power source housing along the side of the second channel and toward the first retention arm; a second complementary retention arm that extends from the inner surface of the second housing and parallel to the first complementary retention arm along the opposite side of the second channel and comes into contact with a second side of the first channel opposite the first side; and a third complementary retention arm that extends over the second outer surface of the power source housing opposite the first outer surface and toward the third retention arm.

In some non-limiting embodiments or aspects, the first retention arm is longer than the second retention arm and extends to approximately a center axis of the power source housing.

In some non-limiting embodiments or aspects, a plane of orientation of the power source housing is substantially orthogonal to the mating plane.

According to some non-limiting embodiments or aspects, provided is a power tool including: a main housing; an electric motor in the main housing; a handle housing that extends from the main housing; a plate; and a power source assembly for providing a supply of power to a wireless communication module, wherein the power source assembly is mounted on the plate, wherein the handle housing includes a first housing portion and a second housing portion that are connected together along a mating plane with the plate between the first housing portion and the second housing portion to define an interior of the handle housing, and wherein the first housing portion, the second housing portion, and the plate form a battery receptacle including a terminal block that engages with a removable battery pack with the first housing portion and the second housing portion connected together along the mating plane with the plate between the first housing portion and the second housing portion.

In some non-limiting embodiments or aspects, the power source assembly includes: a power source housing; and a battery disposed in the power source housing, wherein an inner surface of the plate that faces the interior of the handle housing includes a plurality of snap ribs with chamfered surfaces that receive and support the power source housing including the battery on the plate within the interior of the handle.

Further non-limiting embodiments or aspects are set forth in the following numbered clauses:
Clause 1: A power tool comprising: a main housing; an electric motor in the main housing; a handle housing that extends from the main housing, wherein the handle housing includes a first handle portion that extends from a first end of the main housing, a second handle portion that extends from a second end of the main housing opposite the first end of the main housing, and a third handle portion that connects ends of the first handle portion and the second handle portion; and a wireless communication assembly including: a wireless communication module that includes a printed circuit board (PCB), wireless communication circuitry on the PCB, and a first connector on the PCB, wherein the first connector includes a pair of electrical contacts that is electrically coupled to the wireless communication circuitry; and a power source assembly for providing a supply of electric power to the wireless communication module, wherein the power source assembly is electrically coupled to the pair of electrical contacts of the first connector via a pair of wires, and wherein the wireless communication assembly is disposed in the handle housing.
Clause 2: The power tool of clause 1, wherein the second handle portion has a first cross-sectional area proximate the tool housing and a second cross-sectional area proximate the third handle portion, wherein the first cross-sectional area is greater than the second cross-sectional area, and wherein each of the wireless communication module and the power source assembly is disposed in the first cross-sectional area of the second handle portion.
Clause 3: The power tool of clause 1 or 2, wherein the handle housing including each of the first handle portion, the second handle portion, and the third handle portion includes a first housing portion and a second housing portion that are connected together along a mating plane to define an interior of the handle housing that includes the first cross-sectional area and the second cross-section area of the second handle portion, wherein the wireless communication module is disposed in the first cross-sectional area of the second handle portion proximate a location of the second handle portion at which the interior of the second handle portion decreases from the first cross-sectional area to the second cross-sectional area, wherein the power source assembly is disposed in the first cross-sectional area of the second handle portion proximate an end of the second handle portion that is connected to the main housing, wherein the wireless communication module is located along a first plane within the second handle portion that is substantially orthogonal to the mating plane of the first housing portion and the second housing portion of the second handle portion, wherein the power source assembly is located along a second plane within the second handle portion that is substantially orthogonal to the mating plane of the first housing portion and the second housing portion of the second handle portion, and wherein the first plane is offset relative to the second plane.
Clause 4: The power tool of any of clauses 1-3, wherein the first handle portion extends longitudinally from the main housing, wherein the third handle portion extends at an angle less than 90 degrees from an end of the first handle portion back towards the main housing, wherein the second handle portion connects the third handle portion to the main housing, wherein the wireless communication module is disposed in the second handle portion, and wherein the power source assembly is disposed in the third handle portion.
Clause 5: The power tool of any of clauses 1-4, wherein the handle housing including each of the first handle portion, the second handle portion, and the third handle portion includes a first housing portion and a second housing portion that are connected together along a mating plane to define an interior of the handle housing, wherein the wireless communication module is located along a first plane within the second handle portion that is substantially orthogonal to the mating plane of the first housing portion and the second housing portion of the second handle portion, wherein the power source assembly is located along a second plane within the third handle portion that is substantially orthogonal to the mating plane of the first housing portion and the second housing portion of the third handle portion, wherein the first plane is substantially parallel to a longitudinal axis of the second handle portion, and wherein the second plane is substantially parallel to a longitudinal axis of the third handle portion.
Clause 6: The power tool of any of clauses 1-5, wherein the third handle portion extends substantially perpendicularly to the first handle portion and the second handle portion, wherein the power source assembly is disposed in the second handle portion adjacent a first wall of the second handle portion, and wherein the wireless communication module is disposed in the second handle portion adjacent a second wall of the second housing portion opposite the first wall.
Clause 7: The power tool of any of clauses 1-6, wherein the handle housing including each of the first handle portion, the second handle portion, and the third handle portion includes a first housing portion and a second housing portion that are connected together along a mating plane to define an interior of the handle housing, wherein the wireless communication module is located along a first plane within the second handle portion that is substantially orthogonal to the mating plane of the first housing portion and the second housing portion of the second handle portion, wherein the power source assembly is located along a second plane within the second handle portion that is substantially orthogonal to the mating plane of the first housing portion and the second housing portion of the second handle portion, and wherein the first plane is offset relative to the second plane.
Clause 8: The power tool of any of clauses 1-7, wherein the first plane and the second plane are at an angle of 15 to 30 degrees.
Clause 9: The power tool of any of clauses 1-8, further comprising: a battery receptacle including a terminal block that engages with a removable battery pack; and a control module for supplying electric power from the removable battery pack to the electric motor, wherein the wireless communication module further includes a second connector on the PCB, wherein the second connector includes a plurality of electrical contacts that is electrically coupled to the wireless communication circuitry, wherein the plurality of electrical contacts of the second connector is electrically coupled to the control module via a wiring harness, and wherein the wireless communication module is configured to selectively receive power from the battery via the first connector or from the control module via the second connector.
Clause 10: The power tool of any of clauses 1-9, further comprising: a trigger mechanism; a switch module operatively coupled to the trigger mechanism and the control module, wherein the switch module includes a switch that is actuated by the trigger mechanism to provide a signal to the control module to control a supply of electric power from the removable battery pack to the electric motor, and wherein each of the trigger mechanism and the switch module is disposed in the handle housing.
Clause 11: A wireless communication assembly comprising: a wireless communication module including: a printed circuit board (PCB); a wireless communication circuitry on a first surface of the PCB; an electromagnetic interference (EMI) shield on the first surface of the PCB over the wireless communication circuitry; a plastic over-mold that covers the wireless communication circuitry and the EMI shield; a first connector on the first surface of the PCB and including a pair of electrical contacts that is electrically coupled to the wireless communication circuitry; and a second connector on the first surface of the PCB and including a plurality of electrical contacts that is electrically coupled to the wireless communication circuitry.
Clause 12: The wireless communication assembly of clause 11, wherein the EMI shield includes a cover portion, a sidewall that extends from the cover portion toward the first surface of the PCB, and a plurality of openings in the cover portion, wherein the cover portion and the sidewall of the EMI shield surround and are spaced apart from the wireless communication circuitry, and wherein the plastic over-mold fills in a space between the wireless communication circuitry and the EMI shield.
Clause 13: The wireless communication assembly of clause 11 or 12, wherein the plastic over-mold further covers at least a portion of a second surface of the PCB opposite the first surface of the PCB.
Clause 14: The wireless communication assembly of any of clauses 11-13, wherein the first connector and the second connector are mounted to the first surface of the PCB adjacent to each other along a first edge of the PCB, wherein the wireless communication circuitry is mounted to the first surface of the PCB between the first connector and the second connector and a second edge of the PCB opposite the first edge the PCB, and wherein a third edge of the PCB perpendicular to the first edge and the second edge and a fourth edge of the PCB opposite the third edge of the PCB are exposed from the plastic over-mold.
Clause 15: The wireless communication assembly of any of clauses 11-14, further comprising: a power source assembly including: a power source housing; and a battery including a pair of terminals, wherein the battery is disposed in the power source housing, wherein the power source housing includes an opening that receives first ends of a pair of wires electrically coupled to the pair of terminals of the battery, and wherein second ends of the pair of wires is electrically coupled to a pair of electrical contacts of a complementary first connector connected to the first connector in a complementary manner.
Clause 16: The wireless communication assembly of any of clauses 11-15, wherein the power source housing includes an upper power source housing and a lower power source housing, wherein the upper power source housing includes an upper base, an upper sidewall that extends from the upper base, and an upper opening in the upper sidewall, wherein the lower power source housing includes a lower base, a lower sidewall that extends from the lower base, and a lower opening in the lower sidewall, wherein an end of the upper sidewall of the upper power source housing opposite another end connected to the upper base is fixed to or integral with an end of the lower sidewall of the lower power source housing opposite another end connected to the upper base with the upper opening of the upper power source housing aligned with the lower opening of the lower power source housing to form the opening in the power source housing.
Clause 17: The wireless communication assembly of any of clauses 11-16, wherein the end of the lower sidewall of the lower power source housing includes a seam extending from the lower sidewall and spaced apart from an outer perimeter of the lower sidewall, wherein, with the end of the upper sidewall of the upper power source housing in contact with the end of the lower sidewall of the lower power source housing, an inner surface of the upper sidewall contacts an outer surface of the seam, and the upper power source housing and the lower power source housing are ultrasonically welded together at the inner surface of the upper sidewall and the outer surface of the seam.
Clause 18: The wireless communication assembly of any of clauses 11-17, wherein the upper base of the upper power source housing includes an upper internal recess that extends from the upper opening toward a center of the upper base, wherein the upper internal recess defines a space between an inner surface of the upper base and a first terminal of the battery via which a first end of a first wire of the first ends of the pair of wires is received and electrically coupled to the first terminal of the battery, wherein the lower base of the lower power source housing includes a lower internal recess that extends from the lower opening toward a center of the lower base, wherein the lower internal recess defines a space between the inner surface of the lower base and a second terminal of the battery via which a first end of a second wire of the first ends of the pair of wires is received and electrically coupled to the second terminal of the battery.
Clause 19: The wireless communication assembly of any of clauses 11-18, wherein the first end of the first wire includes a first metal tab crimped to the first end of the first wire, wherein the first metal tab is welded to the first terminal of the battery, wherein the first end of the second wire includes a second metal tab crimped to the first end of the second wire, and wherein the second metal tab is welded to the second terminal of the battery.
Clause 20: The wireless communication assembly of any of clauses 11-19, wherein the upper base includes: a first channel that extends from an outer surface of the upper base and from the upper opening toward the center of the upper base; and a second channel that extends from the outer surface of the upper base and perpendicular to the first channel, wherein a portion of the second channel between ends of the second channel is connected to an end of the first channel opposite another end of the first channel at the upper opening.
Clause 21: A power tool comprising: a main housing; an electric motor in the main housing; a handle housing that extends from the main housing, wherein the handle housing includes a first housing portion and a second housing portion that are connected together along a mating plane to define an interior of the handle housing; a wireless communication module that includes a printed circuit board (PCB), wireless communication circuitry on the PCB, and a first connector on the PCB, wherein the first connector includes a pair of electrical contacts that is electrically coupled to the wireless communication circuitry; and a first retention assembly including: one or more first beams that extend from an inner surface of the first housing portion in a first direction; one or more second beams that extend from an inner surface of the second housing portion in a second direction opposite the first direction such that the one or more first beams and the one or more second beams extend toward each other with ends of the one or more first beams spaced apart from ends of the one or more second beams; wherein the one or more first beams extend a first distance from the inner surface of the first housing portion in the first direction, wherein the one or more second beams extend from the inner surface of the second housing portion a second distance different than the first distance in the second direction opposite the first direction, and wherein the wireless communication module is received in the first retention assembly between the one or more first beams and the one or more second beams.
Clause 22: The power tool of clause 21, further comprising: a first abutment that extends from the inner surface of the first housing portion at a first side of the one or more first beams; a second abutment that extends from the inner surface of the first housing portion at a second side opposite the first side of the one or more first beams, wherein the first distance is less than the second distance, and wherein the wireless communication module is received in the first retention assembly between the first abutment and the second abutment.
Clause 23: The power tool of clause 21 or 22, wherein ends of the one or more first beams include first notches that are configured for sliding engagement with an edge of the PCB, and wherein ends of the one or more second beams include second notches that are configured for sliding engagement with another edge of the PCB.
Clause 24: The power tool of any of clauses 21-23, wherein a plane of orientation of the wireless communication module is substantially orthogonal to the mating plane.
Clause 25: The power tool of any of clauses 21-24, wherein a center axis of the wireless communication module that is parallel to the mating plane is offset relative to the mating plane MP such a portion of the wireless communication module that is within the first housing portion is greater than a portion of the wireless communication module that is within the second housing portion.
Clause 26: The power tool of any of clauses 21-25, further comprising: a power source assembly for providing a supply of electric power to the wireless communication module, wherein the power source assembly includes a power source housing and a battery disposed in the power source housing, wherein the battery is electrically coupled to the pair of electrical contacts of the first connector via a pair of wires, and wherein a first outer surface of the power source housing includes a first channel that extends from the first outer surface of the power source housing and a second channel that extends from the first outer surface of the power source housing and perpendicular to the first channel, and wherein a portion of the second channel between ends of the second channel is connected to an end of the first channel; and a second retention assembly including: a first retention arm that extends from the inner surface of the first housing over the first outer surface of the power source housing along a side of the second channel; a second retention arm that extends from the inner surface of the first housing and parallel to the first retention arm along an opposite side of the second channel and comes into contact with a first side of the first channel; a third retention arm that extends over a second outer surface of the power source housing opposite the first outer surface; a complementary first retention arm that extends from the inner surface of the second housing over the first outer surface of the power source housing along the side of the second channel and toward the first retention arm; a second complementary retention arm that extends from the inner surface of the second housing and parallel to the first complementary retention arm along the opposite side of the second channel and comes into contact with a second side of the first channel opposite the first side; and a third complementary retention arm that extends over the second outer surface of the power source housing opposite the first outer surface and toward the third retention arm.
Clause 27: The power tool of any of clauses 21-26, wherein the first retention arm is longer than the second retention arm and extends to approximately a center axis of the power source housing.
Clause 28: The power tool of any of clauses 21-27, wherein a plane of orientation of the power source housing is substantially orthogonal to the mating plane.
Clause 29: A power tool comprising: a main housing; an electric motor in the main housing; a handle housing that extends from the main housing; a plate; and a power source assembly for providing a supply of power to a wireless communication module, wherein the power source assembly is mounted on the plate, wherein the handle housing includes a first housing portion and a second housing portion that are connected together along a mating plane with the plate between the first housing portion and the second housing portion to define an interior of the handle housing, and wherein the first housing portion, the second housing portion, and the plate form a battery receptacle including a terminal block that engages with a removable battery pack with the first housing portion and the second housing portion connected together along the mating plane with the plate between the first housing portion and the second housing portion.
Clause 30: The power tool of claim 29, wherein the power source assembly includes: a power source housing; and a battery disposed in the power source housing, wherein an inner surface of the plate that faces the interior of the handle housing includes a plurality of snap ribs with chamfered surfaces that receive and support the power source housing including the battery on the plate within the interior of the handle.

These and other features and characteristics of the present disclosure, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosed subject matter.

### BRIEF DESCRIPTION OF THE DRAWINGS

Additional advantages and details are explained in greater detail below with reference to the non-limiting, exemplary embodiments that are illustrated in the accompanying schematic figures, in which:
FIG. 1 depicts a side view of a power tool with a housing half removed, according to some non-limiting embodiments or aspects;
FIGS. 2A and 2B depict perspective view of a wireless communication assembly, according to some non-limiting embodiments or aspects;
FIG. 2C depicts a side view of a wireless communication assembly, according to some non-limiting embodiments or aspects;
FIG. 3A depicts a perspective view of a power source assembly of a wireless communication assembly, according to some non-limiting embodiments or aspects;
FIG. 3B depicts a side view of a power source assembly of a wireless communication assembly, according to some non-limiting embodiments or aspects;
FIG. 3C depicts an exploded perspective view of a power source assembly of a wireless communication assembly, according to some non-limiting embodiments or aspects;
FIG. 3D depicts an exploded perspective view of a power source assembly and a connection assembly of a wireless communication assembly, according to some non-limiting embodiments or aspects;
FIG. 3E depicts an upper housing of a power source assembly of a wireless communication assembly, according to some non-limiting embodiments or aspects;
FIG. 3F depicts a lower housing of a power source assembly of a wireless communication assembly, according to some non-limiting embodiments or aspects;
FIG. 4A depicts a perspective view of a wireless communication module of a wireless communication assembly, according to some non-limiting embodiments or aspects;
FIG. 4B depicts a side view of a wireless communication module of a wireless communication assembly, according to some non-limiting embodiments or aspects;
FIG. 4C depicts a cross-sectional view of a wireless communication module of a wireless communication assembly, according to some non-limiting embodiments or aspects;
FIG. 4D depicts a perspective view of a wireless communication module of a wireless communication assembly without over-molding, according to some non-limiting embodiments or aspects;
FIG. 4E depicts a partially exploded perspective view of a wireless communication module of a wireless communication assembly without over-molding, according to some non-limiting embodiments or aspects;
FIG. 4F depicts a side view of a wireless communication module of a wireless communication assembly without over-molding, according to some non-limiting embodiments or aspects;
FIG. 5A depicts a perspective view of a retention assembly retaining a wireless communication module of a wireless communication assembly, according to some non-limiting embodiments or aspects;
FIG. 5B depicts a perspective view of a retention assembly without a wireless communication module of a wireless communication assembly, according to some non-limiting embodiments or aspects;
FIG. 6A depicts an enlarged perspective view of a portion of the power tool of FIG. 1 including a wireless communication assembly, according to some non-limiting embodiments or aspects;
FIG. 6B depicts an upper view of a retention assembly retaining a power source assembly of a wireless communication assembly, according to some non-limiting embodiments or aspects;
FIG. 6C depicts a lower view of a retention assembly retaining a power source assembly of a wireless communication assembly, according to some non-limiting embodiments or aspects;
FIG. 7A depicts a side view of another power tool with a housing half removed and including a wireless communication assembly, according to some non-limiting embodiments or aspects;
FIG. 7B depicts an enlarged perspective view of a portion of the power tool of FIG. 7A including the wireless communication assembly, according to some non-limiting embodiments or aspects;
FIG. 8A depicts a side view of still another power tool with a housing half removed and including a wireless communication assembly, according to some non-limiting embodiments or aspects;
FIG. 8B depicts an enlarged perspective view of a portion of the power tool of FIG. 8A including the wireless communication assembly, according to some non-limiting embodiments or aspects;
FIG. 9A depicts a perspective view of a power tool including a power source assembly integrated into a plate of a battery receptacle, according to some non-limiting embodiments or aspects;
FIG. 9B depicts an exploded perspective view of the power tool of FIG. 9A including the power source assembly integrated into the plate of the battery receptacle, according to some non-limiting embodiments or aspects;
FIG. 9C depicts an enlarged perspective view of a portion of the power tool of FIGS. 9A and 9B with a housing half removed and including the power source assembly integrated into the plate of the battery receptacle, according to some non-limiting embodiments or aspects;
FIG. 9D depicts an enlarged perspective view of a portion of the power tool of FIGS. 9A and 9B with a housing half removed and the plate including the power source assembly exploded therefrom, according to some non-limiting embodiments or aspects; and
FIGS. 9E-9G depict various perspective views of the power source assembly and the plate, according to some non-limiting embodiments or aspects.

### DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the embodiments as they are oriented in the drawing figures. However, it is to be understood that the embodiments may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting.

It is to be understood that the present disclosure may assume various alternative variations and step sequences, except where expressly specified to the contrary. It is also to be understood that the specific devices and processes illustrated in the attached drawings, and described in the following specification, are simply exemplary and non-limiting embodiments or aspects. Hence, specific dimensions and other physical characteristics related to the embodiments or aspects disclosed herein are not to be considered as limiting.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise. In addition, reference to an action being "based on" a condition may refer to the action being "in response to" the condition. For example, the phrases "based on" and "in response to" may, in some non-limiting embodiments or aspects, refer to a condition for automatically triggering an action (e.g., a specific operation of an electronic device, such as a computing device, a processor, and/or the like).

Some of the techniques described herein may be implemented by one or more computer programs executed by one or more processors residing, for example on a power tool or power equipment. The computer programs may include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

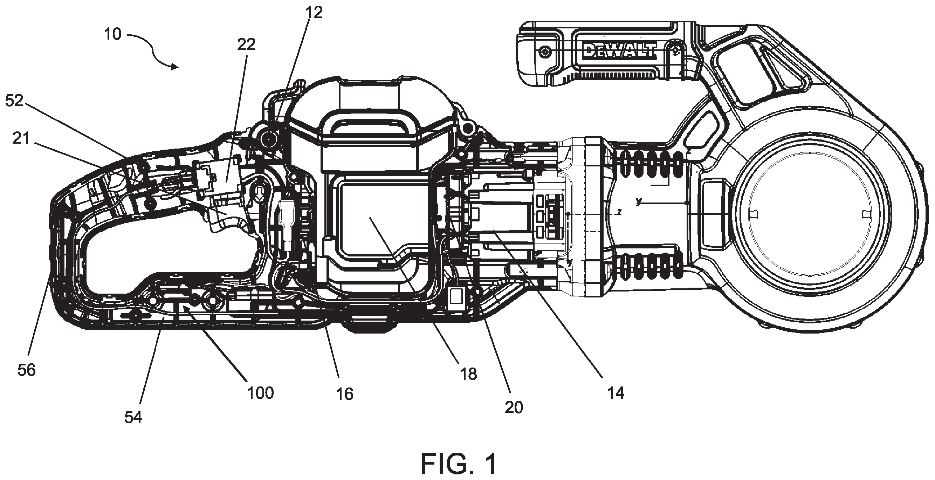

FIG. 1 depicts a side view of power tool 10 (e.g., a pipe threader, etc.) with tool housing 12 half removed, according to some non-limiting embodiments or aspects. As shown in FIG. 1, power tool 10 may include tool housing 12, electric motor 14 (e.g., a high-power electric motor, etc.) disposed in tool housing 12, control module 16 disposed in tool housing 12, battery receptacle or box 18, power module 20 disposed in tool housing 12, trigger mechanism 21, and/or switch module 22 disposed in tool housing 12. Electric motor 14 may include a brushed DC motor, a brushless DC motor, such as an electric brushless direct-current (BLDC) drive motor, and/or the like.

As shown in FIG. 1, in some implementations, battery receptacle or box 18 may be formed in tool housing 12 behind electric motor 14 (e.g., between electric motor 14 and a handle portion of tool housing 12, etc.). Battery receptacle or box 18 may include a terminal block (not shown) that engages with a removable power tool battery pack. For example, battery receptacle or box 18 may receive the battery pack along a receiving axis that is substantially perpendicular (e.g., within 5 degrees of perpendicular, etc.) to the tool axis.

Control module 16 may include a microcontroller, a microprocessor, another programmable semiconductor chip, or an Application Specific Integrated Circuit (ASIC). Control module 16 may be electrically coupled to power module 20, which in this example is mounted directly behind electric motor 14. Power module 20 may include a circuit board, an inverter circuit mounted on the circuit board, and all associated electronic components (e.g., a bus capacitor, resistors, etc.) An example of electric motor 14, power module 20, and control module 16 can be found in U.S. Patent No. 10,786,894, which is incorporated herein by reference in its entirety. Control module 16 and/or power module 20 may be coupled to the battery pack when the battery pack is received within battery receptacle or box 18. Control module 16 and/or power module 20 may control or regulate a supply of electric power from the battery pack received within battery receptacle or box 18 to electric motor 14 for controlling a commutation of electric motor 14, for example, based on a logic signal from an input unit (e.g., trigger mechanism 21, etc.) electrically coupled to control module 16. For example, switch module 22 may be coupled to trigger mechanism 21 and control module 16 and include a switch (e.g., a simple ON/OFF switch, a variable speed switch, such as a potentiometer, and/or the like, etc.) that is actuated by trigger mechanism 21 to provide the logic signal to control module 16.

It is noted, herein, that while some non-limiting embodiments or aspects of the present disclosure are described with reference to a pipe threader, non-limiting embodiments or aspects of a wireless communication system discussed herein can be used with any system for controlling a supply of electric power from a power source to a power consuming component, such as any cordless (battery operated) device, and particularly in any cordless (battery operated) power tool/device. For example, some non-limiting embodiments or aspects of a wireless communication assembly discussed herein may be used with a brushless motor in a drill, torque wrench, grinder, saw, sander, tapper, nailer, powered cart and wheel barrow, lawn mower, lawn and garden tractor, lawn trimmer, lawn edger, lawn and leaf blower or sweeper, hedge trimmer, pruner, lopper, chainsaw, rake, pole saw, tiller, cultivator, aerator, log splitter, post hole digger, trencher, stump grinder, snow thrower (or any other snow or ice cleaning or clearing implement), lawn, wood and leaf shredder and chipper, lawn and/or leaf vacuum, pressure washer, lawn equipment, garden equipment, driveway sprayer and spreader, sports field marking equipment, or any other power tool or power consuming equipment.

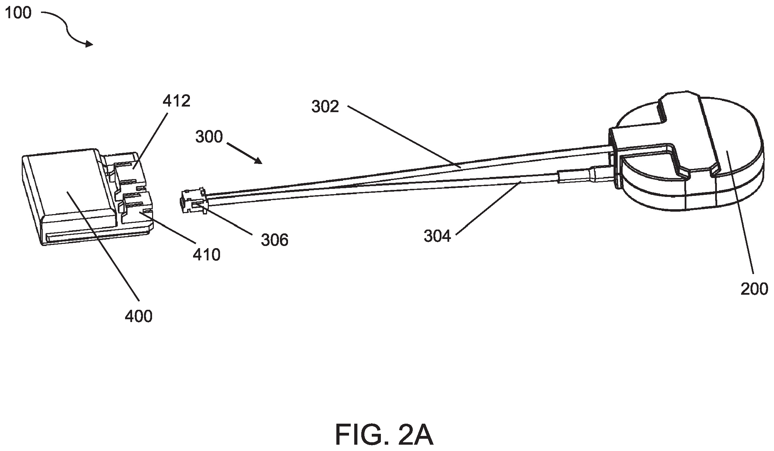

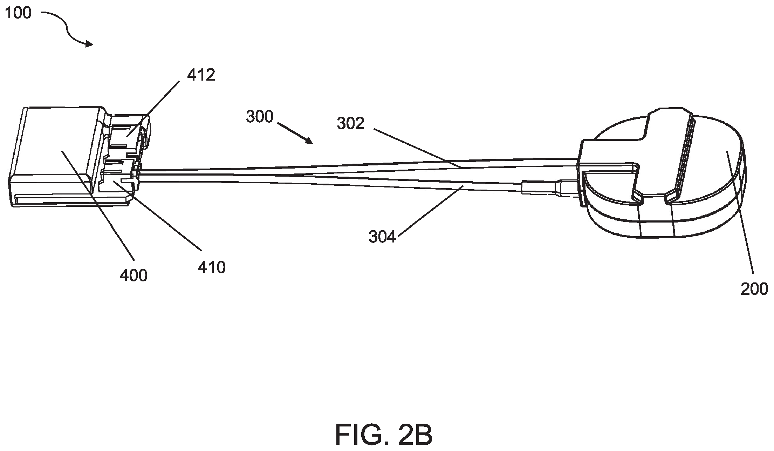

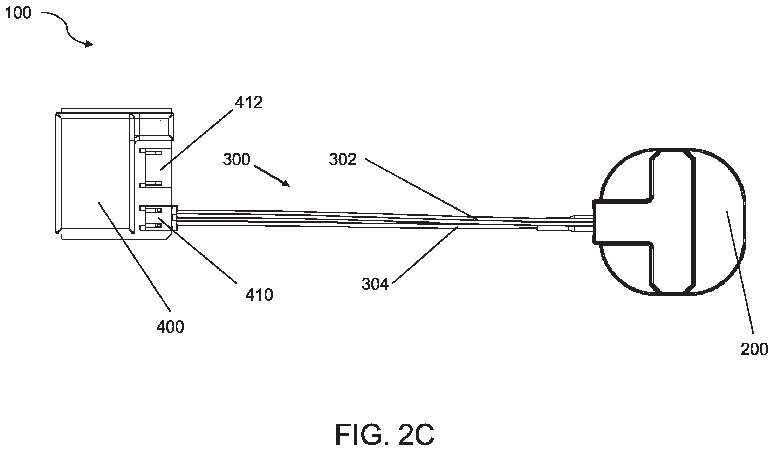

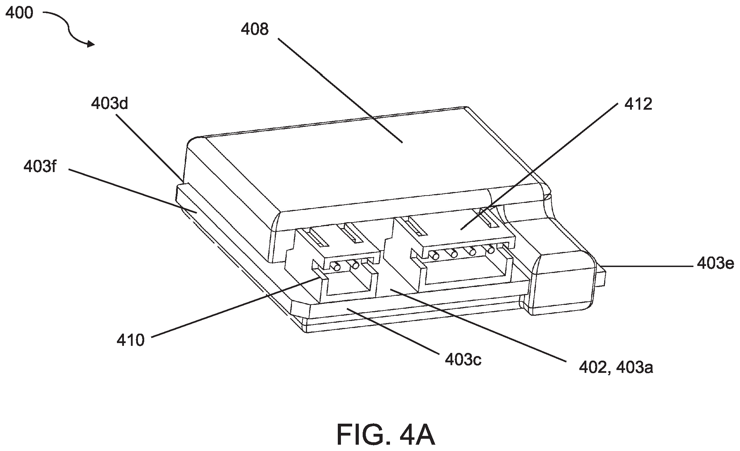

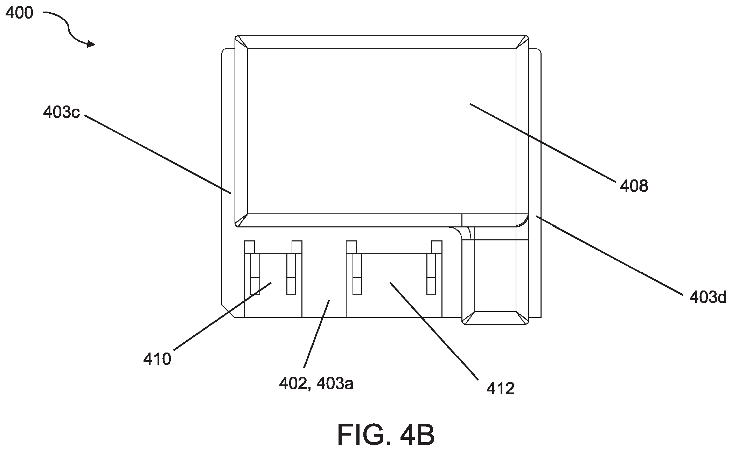

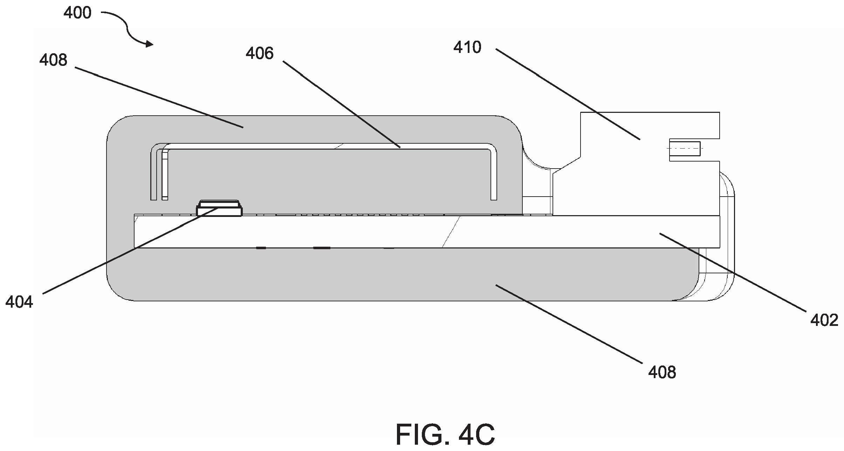

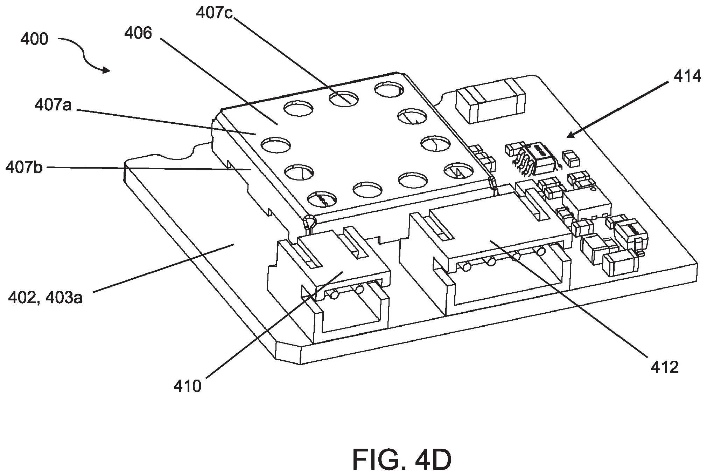

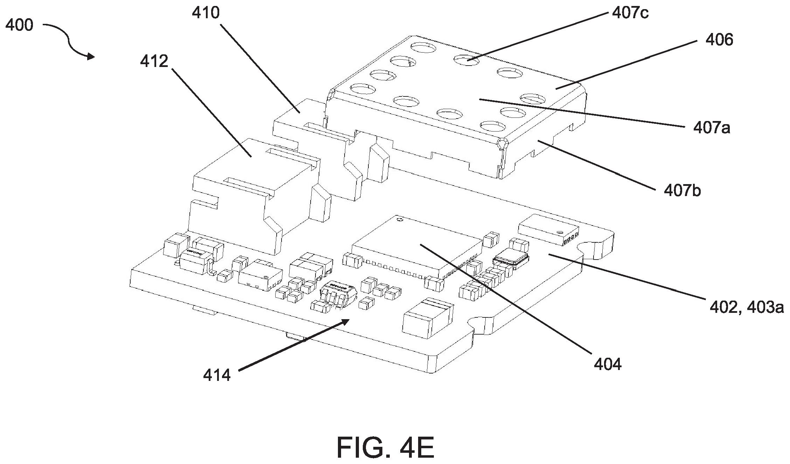

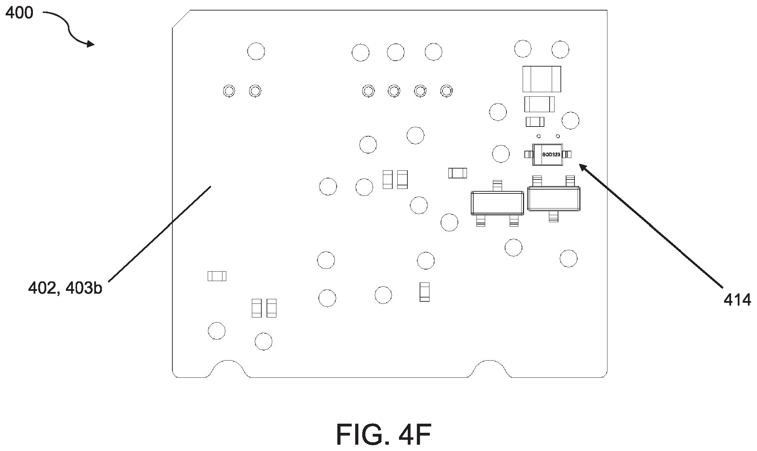

Some non-limiting embodiments or aspects of a wireless communication assembly 100 are described herein with reference to FIGS. 2A-4F. Wireless communication assembly 100 may be disposed in, received in, or include tool housing 12 of power tool 10. Wireless communication assembly 100 includes power source assembly 200, connection assembly 300, and wireless communication module 400.

Power source assembly 200 may include power source housing 202. A power source, such as a coin cell battery CCB may be received, disposed, or mounted within power source housing 202. It should be understood that the power source may be any other type of battery or power accumulator, including but not limited to, a lithium-based battery cell, a button battery, a capacitor, a reachable coin cell or battery cell, etc. Power source housing 202 may include upper power source housing 220, lower power source housing 240, and opening 204.

Upper power source housing 220 may include upper base 222, upper sidewall 224 that extends (e.g., extends perpendicularly, etc.) from upper base 222, and upper opening 226 in upper sidewall 224. For example, with coin cell battery CCB received, disposed, or mounted within power source housing 202, a first face of coin cell battery CCB may face an inner surface of upper base 222 that is surrounded by upper sidewall 224, and upper sidewall 224 may surround at least a portion of a sidewall of coin cell battery CCB between the first face of coin cell battery CCB and a second face of coin cell battery CCB opposite the first face of coin cell battery CCB.

Lower power source housing 240 may include lower base 242, lower sidewall 244 that extends (e.g., extends perpendicularly, etc.) from lower base 242, and lower opening 246 in lower sidewall 244. For example, with coin cell battery CCB received, disposed, or mounted within power source housing 202, the second face of coin cell battery CCB may face an inner surface of lower base 242 that is surrounded by lower sidewall 244, and lower sidewall 244 may surround at least a portion of the sidewall of coin cell battery CCB between the first face of coin cell battery CCB and the second face of coin cell battery CCB.

Upper power source housing 220 may be fixed to or integral with lower power source housing 240. For example, an end of upper sidewall 224 of upper power source housing 220 opposite another end connected to upper base 222 may be fixed to or integral with an end of lower sidewall 244 of lower power source housing 240 opposite another end connected to upper base 242 with upper opening 226 of upper power source housing 220 aligned with lower opening 246 of lower power source housing 240 to form opening 204 in power source housing 202.

In some non-limiting embodiments or aspects, upper power source housing 220 and lower power source housing 240 may be ultrasonically welded together. For example, the end of upper sidewall 224 of upper power source housing 220 may be ultrasonic welded to the end of lower sidewall 244 of lower power source housing 240. As an example, the end of lower sidewall 244 of lower power source housing 240 may include seam 248 extending from lower sidewall 244 and spaced apart from an outer perimeter (e.g., an outer circumference, etc.) of lower sidewall 244. In such an example, with the end of upper sidewall 224 of upper power source housing 220 in contact with the end of lower sidewall 244 of lower power source housing 240, an inner surface of upper sidewall 244 may contact an outer surface of seam 248, and upper power source housing 220 and lower power source housing 240 may be ultrasonically welded together at the ends of the upper and lower sidewalls 224, 244 and/or at the inner surface of lower sidewall 244 and the outer surface of seam 248. In this way, wireless communication assembly 100 may not allow for user access to coin cell battery CCB to a user of wireless communication assembly 100 and/or power tool 10 including wireless communication assembly 100.

In some non-limiting embodiments or aspects, upper base 222 of upper power source housing 220 may include one or more channels 227a, 227b that extend from an outer surface of upper base 222 opposite the inner surface surrounded by upper sidewall 224. For example, upper base 220 may include first channel 227a that extends from an end at upper opening 226 toward a center of upper base 222. First channel 227a may provide additional spacing between the inner surface of upper base 222 and the first face of coin cell battery CCB via which a wire may be received to be electrically coupled to the first face of coin cell battery. Second channel 227b may extend from a first location of upper base 222 adjacent to upper sidewall 224 to a second location of upper base 222 adjacent to upper sidewall 224 that is opposite to (e.g., 180 degrees across from, etc.) the first location. In some implementations, second channel 227b may extend perpendicular to first channel 227a and/or a portion of second channel 227b between ends of second channel 227b at the first location and the second location of upper base 222 adjacent to upper sidewall 224 may be connected to another end of first channel 227a opposite the end of first channel 227 at upper opening 226. Second channel 227b may be configured to complementarily mate with an interior portion of power tool 10 to fix or secure power source assembly 200 at a location within power tool 10 (e.g., to inhibit or prevent rotation or movement of power source assembly 200 with in power tool 10, etc.).

Although described herein with respect to upper power source housing 220, lower power source housing 240 may additionally, or alternatively, include one or more channels the same as or similar to the one or more channels 227a, 227b of upper power source housing 220, a more detailed description of which is omitted in the interest of brevity.

Connection assembly 300 may include first wire 302, second wire 304, and first male connector 306. First male connector 306 may include a first electrical contact electrically coupled to a first end of first wire 302 and a second electrical contact electrically coupled to a first end of second wire 304. A second end of first wire 302 opposite the first end may be electrically coupled to the first face (e.g., a first terminal, etc.) of coin cell battery CCB. For example, the second end of first wire 302 may include metal tab 303 (e.g., a weld tab crimped to the second end, etc.) and metal tab 303 may be welded to the first face of coin cell battery CCB. As an example, first wire 302 may be received through opening 204 of power source housing 202 (e.g., through upper opening 226 of upper power source housing 220 and between the inner surface of upper base 222 and the first face of coin cell battery CCB, etc.). For example, first channel 227a of upper power source housing 220 may form internal recess 228 within upper power source housing 220 that extends from upper opening 226 and accommodates metal tab 303 in contact with the first face of coin cell battery CCB and/or at least a portion of first wire 302 between the first face of coin cell battery CCB and an internal surface of upper power source housing 220.

A second end of second wire 304 opposite the first end may be electrically coupled to the second face (e.g., a second terminal, etc.) of coin cell battery CCB. For example, the second end of second wire 304 may include metal tab 305 (e.g., a weld tab crimped to the second end, etc.) and metal tab 305 may be welded to the second face of coin cell battery CCB. As an example, second wire 304 may be received through opening 204 of power source housing 202 (e.g., through lower opening 246 of lower power source housing 240 and between the inner surface of lower base 242 and the second face of coin cell battery CCB, etc.). For example, internal recess 247 may extend from lower opening 246 within lower power source housing 240 to accommodate metal tab 303 in contact with the first face of coin cell battery CCB and/or at least a portion of first wire 302 between the first face of coin cell battery CCB and an internal surface of upper power source housing 220.

Wireless communication module 400 may include printed circuit board (PCB) 402, wireless communication circuitry 404, electromagnetic interference (EMI) shield 406, plastic over-mold 408, first female connector 410, second female connector 412, and/or additional electrical or circuit components 414.

Wireless communication circuitry 404 may be mounted on first surface 403a of PCB 402 and may be capable of wirelessly receiving information from and/or wirelessly communicating information to an external device (e.g., to a device external to power tool 10, etc.). For example, wireless communication circuitry 404 may be capable of receiving information via a short-range wireless communication connection (e.g., an NFC communication connection, an RFID communication connection, a Bluetooth^{®} communication connection, an Adaptive Network Topology (ANT) or ANT+ communication connection, etc.), and/or communicating information via the short-range wireless communication connection. As an example, wireless communication circuitry 404 may include a Bluetooth^{®} Low Energy Module (BLEM), a Bluetooth^{®} System-on-a-Chip (Soc), and/or the like, including a communication controller and a complementary transceiver (including e.g., an antenna). Wireless communication circuitry 404 may include, additionally and/or alternatively, a long-range wireless communication module including a communication controller and a transceiver that operate using long-range communication protocols such as LPWAN, LoRa, LoRaWAN, Wi-Sun, etc.

EMI shield 406 may be mounted on first surface 403a of PCB 402 over wireless communication circuitry 404. For example, EMI shield 406 may be configured to shield wireless communication circuitry 404 from electromagnetic waves (e.g., to inhibit or prevent interference with other devices, etc.). EMI shield 406 may include a metal or metal alloy, such as aluminum, beryllium copper, brass, copper, cold-rolled steel, nickel silver, phosphorus bronze, stainless steel, and/or the like. EMI shield 406 may include cover portion 407a (e.g., over wireless communication circuitry 404, etc.), sidewall 407b that extends from cover portion 407a toward the first surface 403a of the PCB (e.g., sidewall 407b may be connected to or mounted to PCB 402, etc.), and a plurality of openings 407c in cover portion 407a. EMI shield 406 may be mounted on PCB 402 over wireless communication circuitry 404, and cover portion 407a and sidewall 407b may surround and be spaced apart from wireless communication circuitry 404.

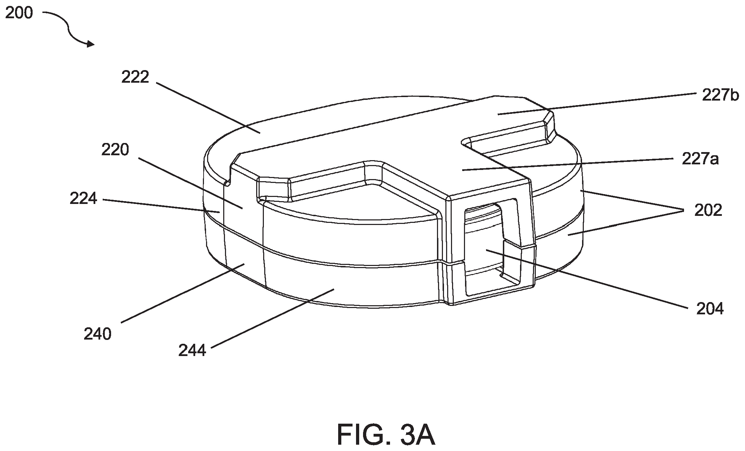

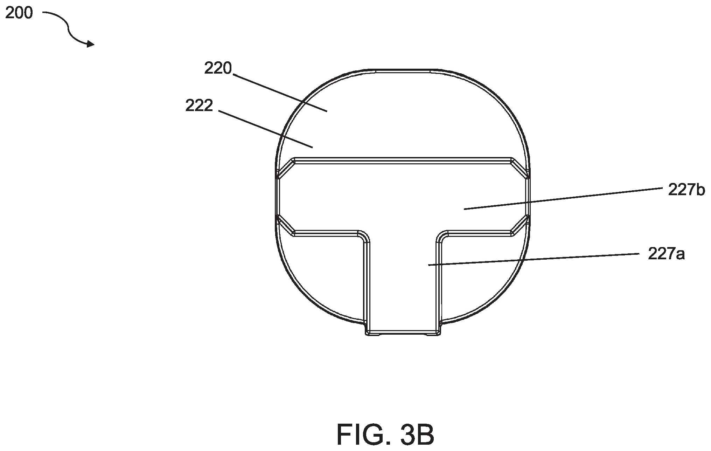

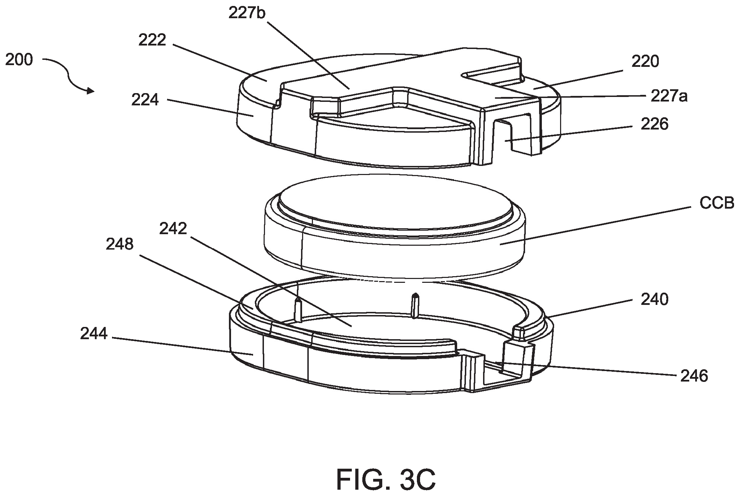

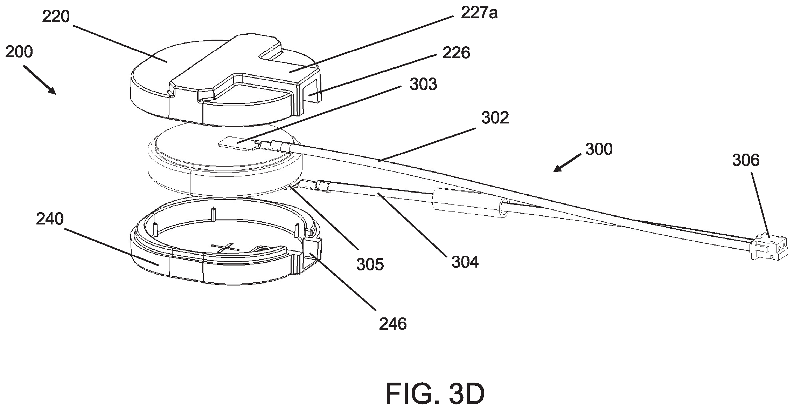

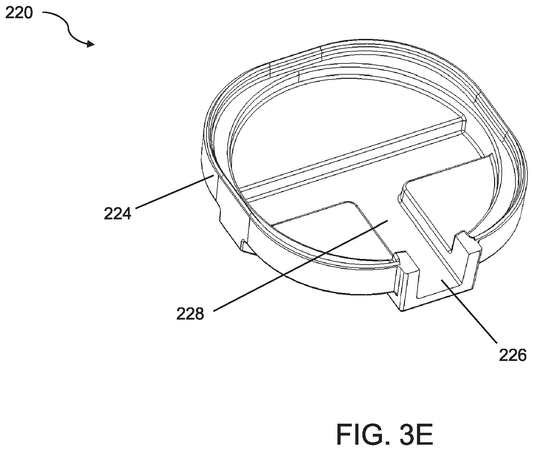

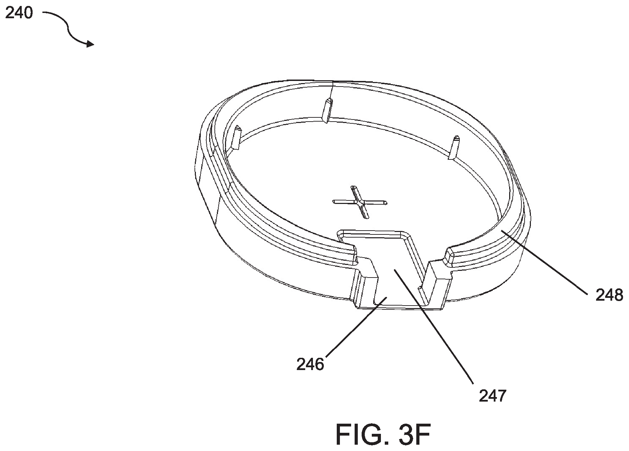

Plastic over-mold 408 (e.g. a low-pressure mold, etc.) may cover wireless communication circuitry 404, EMI shield 406, and additional electrical or circuit components 414 on first surface 403a of PCB 402 and/or second surface 403b of PCB 402 opposite first surface 403a. Plastic over-mold 408 may be applied to PCB 402 in an over-molding process (e.g., in a low-pressure molding process, etc.) in which the plastic material flows through the plurality of openings 407c in cover portion 407a of EMI shield 406 to fill in a space between wireless communication circuitry 404 and cover portion 407a and/or sidewall 407b of EMI shield 406. For example, as shown in FIG. 3C, plastic over-mold 408 may be located between wireless communication circuitry 404 and EMI shield 406 (e.g., between wireless communication circuitry 404 and cover portion 407 and/or sidewall 407b, etc.), over EMI shield 406, on a portion of first surface 403a of PCB 402 beneath EMI shield 406 that does not include communication circuitry 404, and on second surface 403b of PCB, and/or on additional electrical or circuit components 414 on first surface 403a of PCB 402 and/or second surface 403b of PCB 402 opposite first surface 403a. In this way, plastic over-mold 408 may encapsulate and protect wireless communication circuitry 404, EMI shield 406, and/or additional electrical or circuit components 414 from an external environment and secure wireless communication circuitry 404, EMI shield 406, and/or additional electrical or circuit components 414 to PCB 402 to protect against vibration, which may result from operation of a power tool in which wireless communication assembly 100 may be included.

First female connector 410 and second female connector 412 may be mounted to first surface 403a of PCB 402 adjacent to each other along first edge or side 403c of PCB 402. Wireless communication circuitry 404 may be mounted between first female connector 410 and second female connector 412 and second edge or side 403d of PCB 402 opposite first edge or side 403c of PCB 402. EMI shield 406 may be mounted to PCB 402 over wireless communications circuitry 404 between first female connector 410 and second female connector 412 and second edge or side 403d of PCB 402. Additional electrical or circuit components 414 may be mounted between EMI shield 406 and/or second female connector 412 and third edge or side 403e of PCB 402 perpendicular to first and second sides or edges 403c, 403d of PCB 402. First female connector 401 may be mounted to first surface 403a of PCB 402 between second female connector 412 and fourth edge or side 403f of PCB 402 that is perpendicular to first and second sides or edges 403c, 403d of PCB 402 and parallel to third edge or side 403e of PCB 402.

Plastic over-mold 408 may cover wireless communication circuitry 404, EMI shield 406, additional electrical or circuit components 414 on PCB 402, first surface 403a of PCB 402, second surface 403b of PCB 402, first edge or side 403c of PCB 402, and second edge or side 403d of PCB 402 between third edge or side 403e of PCB 402 and fourth edge or side 403f of PCB 402. Third edge or side 403e of PCB 402 and fourth side 403f of PCB 402 may be exposed from plastic over-mold 408. For example, plastic over-mold 408 may be applied to PCB 402 in a manner that leaves third edge or side 403e of PCB 402 and fourth side 403f of PCB 402 exposed. As an example, the exposed third edge or side 403e of PCB 402 and fourth side 403f of PCB 402 may be configured for sliding engagement with retention assembly 500 within tool housing 12 to secure wireless communication module 400 within tool housing 12.

First female connector 410, second female connector 412, and a portion of first edge or side 403c of PCB 402 adjacent to first female connector 410 and second female connector 412 may be exposed from plastic over-mold 408. For example, plastic over-mold 408 may be applied to PCB 402 in a manner that leaves first female connector 410, second female connector 412, and a portion of first edge or side 403c of PCB 402 adjacent to first female connector 410 and second female connector 412. A portion of over-mold 408 applied to first surface 403a of PCB 402 may be connected to a portion of over-mold 408 applied to second surface 403b of PCB 402 via a portion of over-mold 408 applied to first edge or side 403c of PCB 402 between second female connector 412 and third edge or side 403e of PCB and/or via a portion over-mold 408 applied to second edge or side 403d of PCB 402 between third edge or side 403e and fourth edge or side 403d of PCB 402. In this way, plastic over-mold 408 and first female connector 410 and second female connector 412 may provide greater electrostatic discharge (ESD) protection than an assembly including exposed terminals.

In some non-limiting embodiments or aspects, wireless communication module 400 may have dimensions including a length of 22.5mm, a width of 25.0 mm, and a height of 6.7mm. For example, by removing power source assembly 200 from wireless communication module 400, a volume of wireless communication module 400 may be reduced, thereby enabling wireless communication module 400 to be positioned in more locations within tool housing 12, and a length of a wiring harness for connecting wireless communication module to control module 16 may be adjusted for each individual power tool 10 relative to a location of control module 16.

First female connector 410 may include a pair of electrical contacts that is electrically coupled to wireless communication circuitry 404. First female connector 410 may be configured to receive first male connector 306 to electrically couple the pair of electrical contacts to coin cell battery CCB via first wire 302 and second wire 304 of connection assembly 300.

Second female connector 412 may include a plurality of electrical contacts that is electrically coupled to wireless communication circuitry 404. Second female connector 412 may be configured to receive a further male connector (e.g., a wire harness, etc.) to electrically couple wireless communication circuitry 404 to control module 16 of power tool 10. For example, wireless communication circuitry 404 may be configured to receive a supply of power from control module 16 of power tool 10 and/or to receive information from and/or communicate information to control module 16 of power tool 10 via the further male connector or wire harness that electrically couples wireless communication circuitry 404 to control module 16 of power tool 10.

Wireless communication circuitry 404 may be configured to selectively receive power from coin cell battery CCB via first female connector 410 or from the power control module or motor control unit of power tool 10 via second female connector 412.

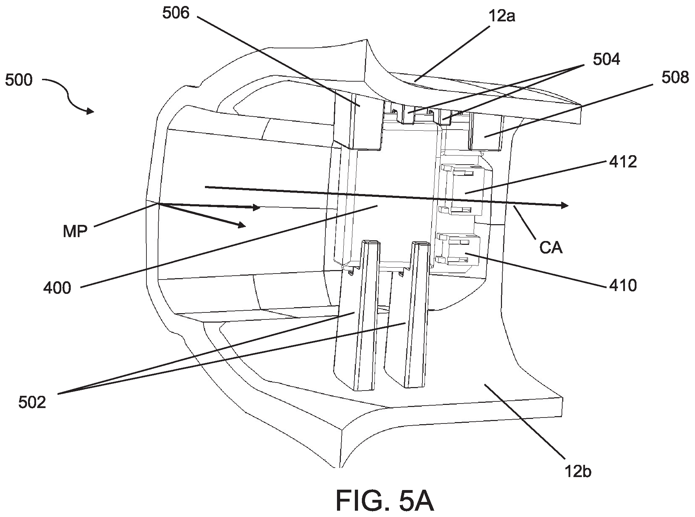

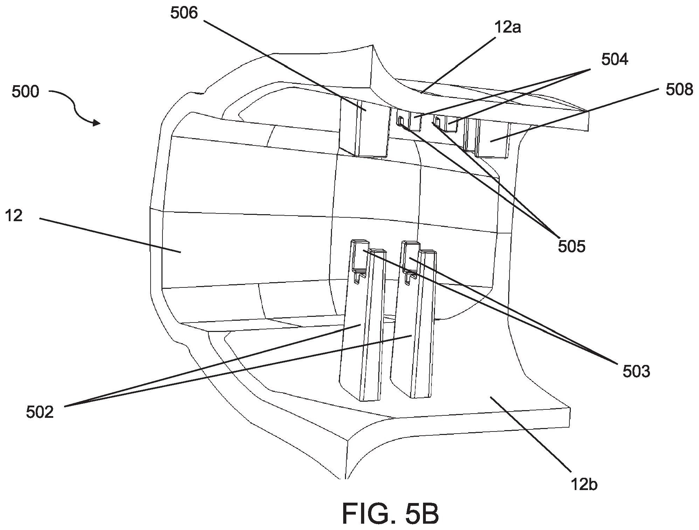

Some non-limiting embodiments or aspects of a retention assembly 500 for wireless communication module 400 of wireless communication assembly 100 are described herein with reference to FIGS. 5A and 5B. Retention assembly 500 may be disposed in, received in, or include tool housing 12 of power tool 10. Tool housing 12 may include first housing portion 12a and second housing portion 12b. For example, first housing portion 12a and second housing portion 12b may be mated or connected together along a mating plane MP, and when mated connected together, first housing portion 12a and second housing portion 12b define an interior space or cross-sectional area of tool housing 12 therein. Retention assembly 500 may include one or more first beams 502, one or more second beams 504, first abutment 506, and/or second abutment 508.

The one or more first beams 502 may extend from an inner surface of first housing portion 12a in a first direction, and the one or more second beams 504 may extend from an inner surface of second housing portion 12b in a second direction opposite the first direction such that the one or more first beams 502 and the one or more second beams 504 extend toward each other with ends of the one or more first beams 502 spaced apart from ends of the one or more second beams 504. The ends of the one or more first beams 502 may include notches 503 that are configured for sliding engagement with one of third edge or side 403e of PCB 402 or fourth edge or side 403f of PCB 402, and the ends of the one or more second beams 504 may include notches 505 that are configured for sliding engagement with the other of third edge or side 403e of PCB 402 or fourth edge or side 403f of PCB 402.

The notches 503 at the ends of the one or more first beams 502 and/or the notches 505 at the ends of the one or more second beams may be stepped from a first width configured for sliding engagement with a portion of wireless communication module 400 including plastic over-mold 408 to a second width smaller than the first width that is configured for sliding engagement with the exposed third edge or side 403e of PCB 402 exposed from plastic over-mold 408 or the exposed fourth side 403f of PCB 402 exposed from plastic over-mold 408. With wireless communication module 400 received, disposed, or mounted within notches 503 and 505, notches 503 and 505 may inhibit or prevent lateral movement of wireless communication module 400 within tool housing 12.

In some implementations, as shown in FIG. 5A, the one or more first beams 502 may be different in height from the one or more second beams 504, such that wireless communication module 400 is offset relative to a mating plane MP at which first housing portion 12a mates with or connects to second housing portion 12b. For example, the one or more first beams 502 may extend a first distance from the inner surface of first housing portion 12a in the first direction, and the one or more second beams 504 may extend from an inner surface of second housing portion 12b a second distance different than the first distance in the second direction opposite the first direction. As an example, first housing portion 12a and second housing portion 12b may be generally similar in shape in a complementary fashion and meet along the mating plane MP that forms a plane of the tool. In such an example, a center axis CA of wireless communication module 400 that is parallel to the mating plane MP may be offset relative to the mating plane MP, such that wireless communication module 400 is mostly accommodated within first housing portion 12a. This arrangement enables more effective placement of the module within first housing portion 12a during assembly. Further, a plane of orientation of wireless communication module 400 (e.g., a center axis CA of wireless communication module 400, etc.) may be substantially orthogonal (e.g., within 5 degrees of orthogonal, etc.) to the mating plane.

First abutment 506 may extend from the inner surface of tool housing 12 at a first side of the one or more first beams 502 or the one or more second beams 504, and second abutment 508 may extend from the inner surface of tool housing 12 at a second side opposite the first side of the one or more first beams 502 or the one or more second beams 504. For example, first abutment 506 may be spaced apart from the one or more first beams 502 or the one or more second beams 504 in a first axial direction, and second abutment 508 may be spaced apart from the one or more first beams 502 or the one or more second beams 504 in a second axial direction opposite the first axial direction such that wireless communication module 400 is capable of being received within notches 503 and 505 for sliding engagement therewith. With wireless communication module 400 within notches 503 and 505, first abutment 506 may inhibit or prevent axial movement of wireless communication module 400 in the first axial direction, and second abutment 508 may inhibit or prevent axial movement of wireless communication module 400 in the second axial direction opposite the first axial direction.

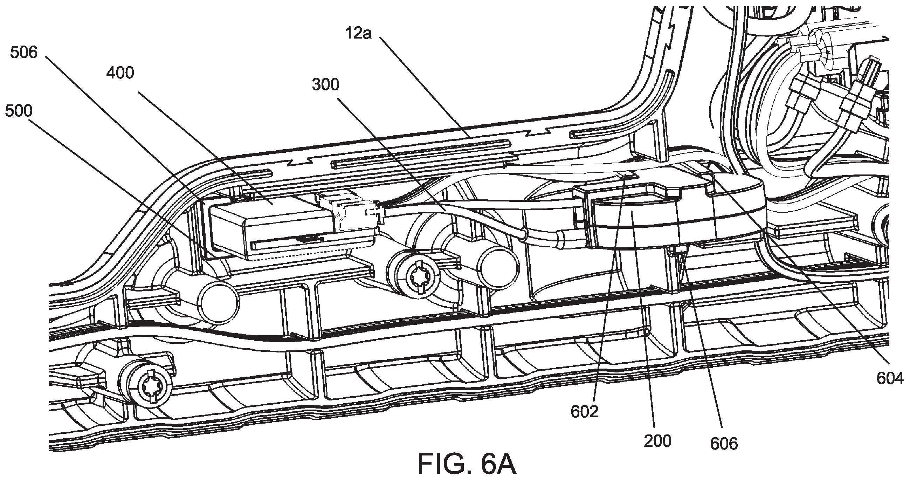

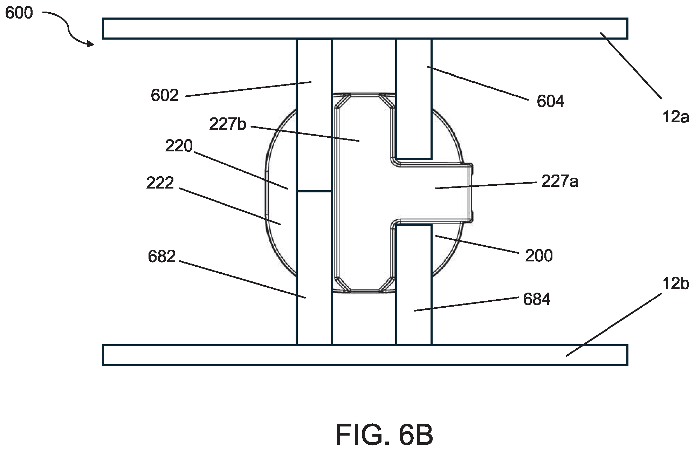

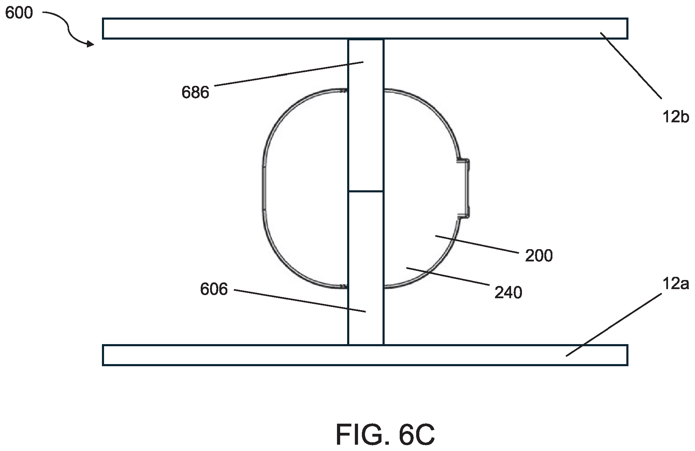

Referring again to FIG. 1, and referring also to FIG. 6A, which depicts an enlarged perspective view of a portion of power tool 10 of FIG. 1 including wireless communication assembly 100, according to some non-limiting embodiments or aspects, a handle housing, which may include first handle portion 52, second handle portion 54, and third handle portion 56, may be connected to, or integral with, tool housing 12 (e.g., a control module housing portion) proximate a rear end of battery receptacle 18 opposite electric motor 14. For example, first handle portion 52 (e.g., a grip handle, etc.) may extend from a first end of tool housing 12, second handle portion 54 (e.g., a first D-handle portion, etc.) may extend from a second end of tool housing 12 opposite the first end of tool housing 12, and third handle portion 56 (e.g., a second D-handle portion, etc.) may connect ends of first handle portion 52 and second handle portion 54 (e.g., may extend substantially perpendicularly (e.g., within 5 degrees of perpendicular, etc.) to first handle portion 52 and second handle portion 54, etc.). First handle portion 52 may include trigger mechanism 21 proximate an end of first handle portion 52 that is connected to tool housing 12. A first cross-sectional area (e.g., an interior cross-sectional space, etc.) of second handle portion 54 proximate tool housing 12 may be greater than a second cross-sectional area of second handle portion 54 proximate third handle portion 56. For example, a cross-sectional area of second handle portion 54 may decrease as second handle portion 54 extends away from tool housing 12 toward third handle portion 56.

Some non-limiting embodiments or aspects of a retention assembly 600 for power source assembly 200 of wireless communication assembly 100 are described herein with reference to FIGS. 6A-6C. Retention assembly 600 may be disposed in, received in, or include a handle housing (e.g., second handle portion 54, etc.). As shown in FIGS. 6A-6C, first housing portion 12a may include first retention arm 602 that extends over upper base 222 of upper power source housing 220 of power source assembly 200, along a side of second channel 227b, second retention arm 604 that extends parallel to first retention arm 602 on the other side of channel 227b and comes into contact with first channel 227a, and third retention arm 606 that extends over the lower surface of lower power source housing 240 of power source assembly 200. First retention arm 602 may be longer that second retention arm 604 and extend to approximately a center axis of power source housing 202. Second housing portion 12b may have similar complimentary retention arms 682, 684, and 686 that cooperatively capture power source housing 202 when first housing portion 12a and second housing portion 12b are mated or connected together.

Wireless communication assembly 100 may be received, disposed, or mounted in second handle portion 54. For example, wireless communication assembly 100 may be received, disposed, or mounted in a first portion of second handle portion 54 having the first cross-sectional area greater than the second cross-sectional area. As an example, second handle portion 54 may include retention assembly 500 proximate a location of second handle portion 54 at which the cross-sectional area of second handle portion 54 decreases from the first cross-sectional area to the second cross-sectional area. Wireless communication module 400 may be received, disposed, or mounted within retention assembly 500 within second handle portion 54 to secure wireless communication module 400 within second handle portion 54. Power source assembly 200 may be received, disposed, or mounted in retention assembly 600 proximate the end of second handle portion 54 that is connected to tool housing 12, and connection assembly 300 may connect power source assembly 200 to wireless communication module 400 by extending through second handle portion 54. Wireless communication module 400 may be electrically coupled to control module 16 of power tool 10 via a further male connector or wire harness that extends through second handle portion 54 to tool housing 12 in which control module 16 may be located. In an example, wireless communication module 400 may be located along a first plane within second handle portion 54 that is substantially orthogonal (e.g., within 5 degrees of orthogonal, etc.) to the mating plane MP of first housing portion 12a and second housing portion 12b, and power source assembly 200 may be located along a second plane within second handle portion 54 that is also substantially orthogonal (e.g., within 5 degrees of orthogonal, etc.) to the mating plane MP. In an example, the first plane is offset relative to the second plane. In an embodiment, the two planes are substantially parallel (e.g., within 5 degrees of parallel, etc.).

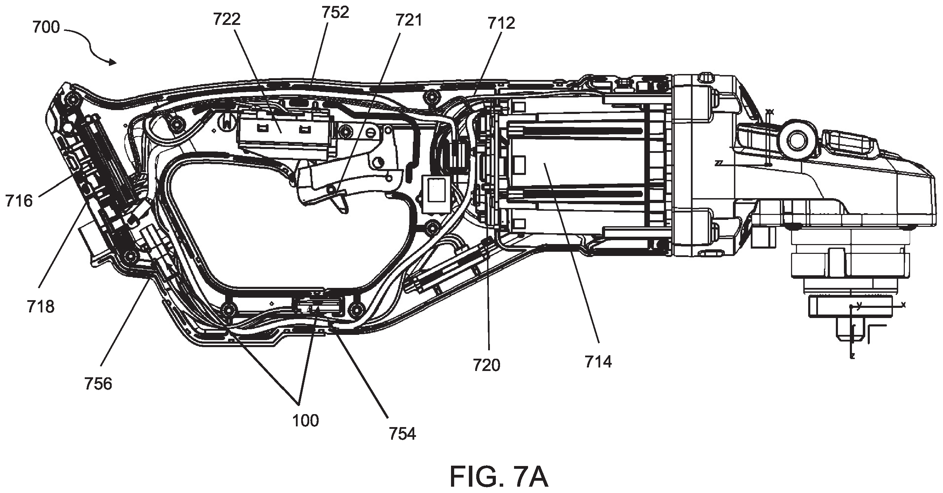

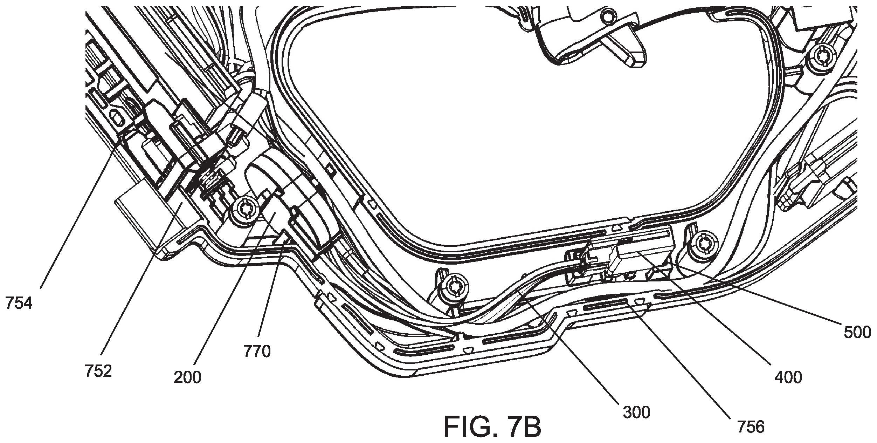

FIG. 7A depicts a side view of power tool 700 (e.g., a right-angle drill, etc.) including wireless communication assembly 100 with tool housing 712 half removed, according to some non-limiting embodiments or aspects. As shown in FIG. 7A, power tool 700 may include tool housing 712, electric motor 714 (e.g., a high-power electric motor, etc.) disposed in tool housing 712, control module 716 disposed in tool housing 712, battery receptacle or box 718, power module 720 disposed in tool housing 12, trigger mechanism 721, and/or switch module 722 disposed in tool housing 712. Electric motor 714, control module 716, battery receptacle 718, power module 720, trigger mechanism 721, and switch module 722 may be substantially similar to electric motor 14, control module 16, battery receptacle or box 18, power module 20, trigger mechanism 21, and switch mechanism 22, respectively, as shown and described in other embodiments of the present patent application. FIG. 7B depicts an enlarged perspective view of a portion of power tool 700 of FIG. 7A including wireless communication assembly 100, according to some non-limiting embodiments or aspects.

As shown in FIGS. 7A and 7B, a handle housing, which may include first handle portion 752, second handle portion 754, and third handle portion 756, may be connected to, or integral with, tool housing 12 (e.g., a motor case portion, a power module housing portion, etc.) proximate a rear end electric motor 14 opposite an end effector of power tool 712. For example, first handle portion 752 (e.g., a grip handle, etc.) may extend longitudinally from a motor case portion of tool housing 712 that houses the electric motor 714, third handle portion 756 (e.g., a first D-handle portion, etc.) may extend at an angle (e.g., an angle less than 90 degrees, etc.) from a first end of first handle portion 752 back towards electric motor 714 and a second end of first handle portion 752 opposite the first end and electric motor 714, and second handle portion 756 (e.g., a second D-handle portion, etc.) may connect the motor case portion of tool housing 12 to third handle portion 756. The second end of first handle portion 752 proximate electric motor 714 may include trigger mechanism 721 and switch mechanism 722. Control module 716 may be disposed in third handle portion 756 proximate the first end of first handle portion 752.

Wireless communication assembly 100 may be received, disposed, or mounted in second handle portion 754 and third handle portion 756. For example, third handle portion 756 may include retention assembly 600 and second handle portion 756 may include retention assembly 500. Wireless communication module 400 may be received, disposed, or mounted within retention assembly 500 within second handle portion 754 to secure wireless communication module 400 therein, and power source assembly 200 may be received, disposed, or mounted within retention assembly 600 within third handle portion 756 to secure power source assembly 200 therein proximate a location of third handle portion 756 that connects to second handle portion 754, and connection assembly 300 may connect power source assembly 200 to wireless communication module 400 by extending through second handle portion 754 and third handle portion 756. Wireless communication module 400 may be electrically coupled to control module 716 of power tool 700 via a further male connector or wire harness that extends through second handle portion 754 to third handle portion 756. In an example, wireless communication module 400 may be located along a first plane within second handle portion 754 that is substantially orthogonal (e.g., within 5 degrees of orthogonal, etc.) to the mating plane MP of first housing portion 12a and second housing portion 12a, and power source assembly 200 may be located along a second plane within third handle portion 756 that is also substantially orthogonal (e.g., within 5 degrees of orthogonal, etc.) to the mating plane MP of first housing portion 12a and second housing portion 12b. In some implementations, the first and second planes of wireless communication module 400 and power source assembly 200 may be substantially orthogonal (e.g., within 5 degrees of orthogonal, etc.) to the mating plane MP of first housing portion 12a and second housing portion 12b. Further, the first plane may be substantially parallel (e.g., within 5 degrees of parallel, etc.) to an axis (e.g., a longitudinal axis, etc.) of second handle portion 754, and the second plane may be substantially parallel (e.g., within 5 degrees of parallel, etc.) to an axis (e.g., a longitudinal axis, etc.) of third handle portion 756. The second plane may also be substantially parallel (e.g., within 5 degrees of parallel, etc.) to a receiving axis of the battery receptacle and/or a plane of control module 716.

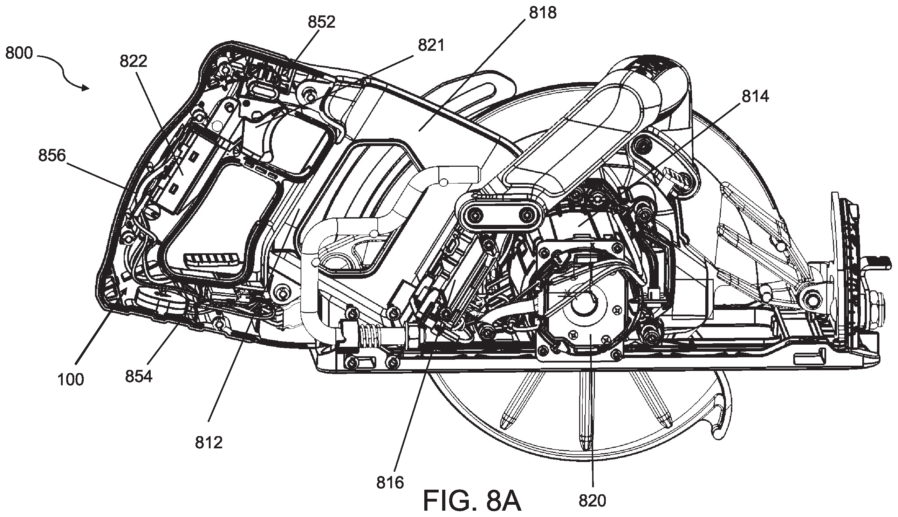

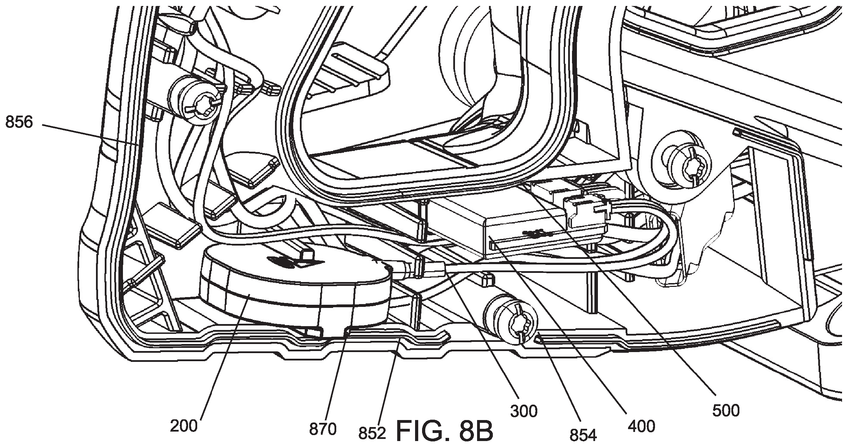

FIG. 8A depicts a side view of power tool 800 (e.g., a circular saw, etc.) including wireless communication assembly 100 with tool housing 812 half removed, according to some non-limiting embodiments or aspects. As shown in FIG. 8A, power tool 800 may include tool housing 812, electric motor 814 (e.g., a high-power electric motor, etc.) disposed in tool housing 812, control module 816 disposed in tool housing 812, battery receptacle or box 818, power module 820 disposed in tool housing, trigger mechanism 821, and/or switch module 822 disposed in tool housing. Electric motor 814, control module 816, and battery receptacle or box 818, power module 820, trigger mechanism 821, and/or switch module 822 may be substantially similar to electric motor 14, control module 16, and battery receptacle or box 18, power module 20, trigger mechanism 21, and switch mechanism 22, respectively, as shown and described in other embodiments of the present patent application. FIG. 8B depicts an enlarged perspective view of a portion of power tool 800 of FIG. 8A including wireless communication assembly 100, according to some non-limiting embodiments or aspects.

As shown in FIGS. 8A and 8B, a handle housing (e.g., a pistol shaped grip, etc.), which may include first handle portion 852, second handle portion 854, and third handle portion 856, may be connected to, or integral with, tool housing 12 (e.g., a motor case portion, a power module housing portion, etc.) proximate a rear end of battery receptacle 18 opposite electric motor 14. For example, first handle portion 852 may extend from a first end of tool housing 12, second handle portion 854 may extend from a second end of tool housing 12 opposite the first end of tool housing 12, and third handle portion 56 may connect ends of first handle portion 852 and second handle portion 854 (e.g., may extend substantially perpendicularly (e.g., within 5 degrees of perpendicular, etc.) to first handle portion 852 and second handle portion 854, etc.). Third handle portion 852 may include trigger mechanism 821 proximate an end of first handle portion 852 opposite another end of first handle portion 852 that is connected to tool housing 12.

Wireless communication assembly 100 may be received, disposed, or mounted in second handle portion 854. For example, second handle portion 854 may include retention assembly 500 proximate an end of second handle portion 854 that is connected to tool housing 812 and retention assembly 600 proximate an opposite end of second handle portion that is connected to third handle portion 856. Wireless communication module 400 may be received, disposed, or mounted within retention assembly 500 within second handle portion 854 to secure wireless communication module 400 within second handle portion 854. Power source assembly 200 may be received, disposed, or mounted in retention assembly 600 within second handle portion 854 to secure power source assembly 200 within second handle portion 854.

As shown in FIG. 8B, power source assembly 200 may be located adjacent a first wall of second handle portion 854 and wireless communication module 400 may be located adjacent a second wall of second housing portion 854 opposite the first wall. In some implementations beams 502, 504 and/or abutments 506 of retention assembly 500 and/or retention arms 602, 604, 606 and/or 682, 684, 686 of retention assembly 600 may be integrally formed as part of an inner wall (e.g., the first wall, the opposite second wall, etc.) of second handle portion 854 (e.g., integrally formed as part of first housing portion 12a and/or second housing portion 12b, etc.). In an example, wireless communication module 400 may be located along a first plane within second handle portion 854 that is substantially orthogonal (e.g., within 5 degrees of orthogonal, etc.) to the mating plane MP of first housing portion 12a and second housing portion 12b, and power source assembly 200 may be located along a second plane within second handle portion 854 that is also substantially orthogonal (e.g., within 5 degrees of orthogonal, etc.) to the mating plane MP. In an example, the first plane is offset relative to the second plane. In an embodiment, the two planes are at an angle of 15 to 30 degrees.

Connection assembly 300 may connect power source assembly 200 to wireless communication module 400 by extending through second handle portion 854. Wireless communication module 400 may be electrically coupled to control module 816 of power tool 800 via a further male connector or wire harness that extends through base member 852 into and through pistol shaped grip 850, in which control module 816 may be located.

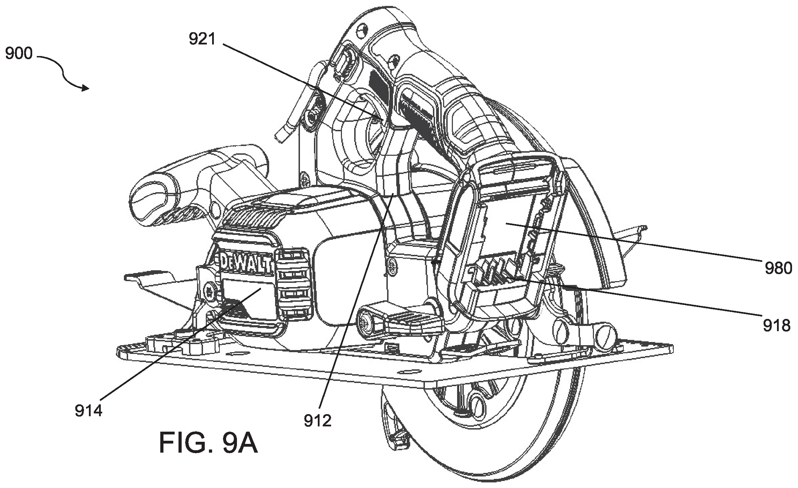

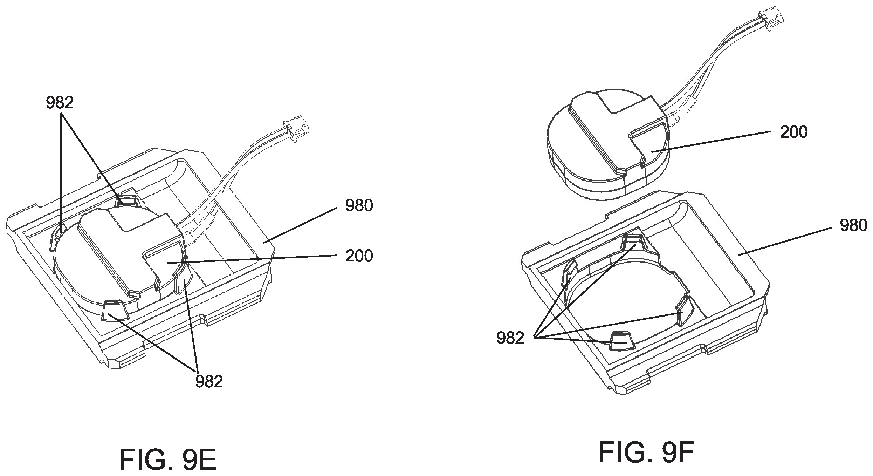

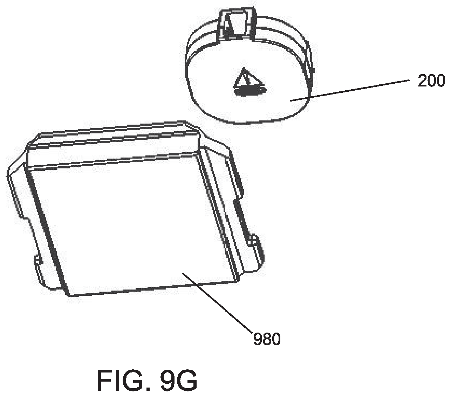

FIG. 9A depicts a perspective view of power tool 900 (e.g., a circular saw, etc.) including power source assembly 200 integrated into plate 980 of battery receptacle or box 918, according to some non-limiting embodiments or aspects. As shown in FIG. 9A, power tool 900 may include tool housing 912, electric motor 914 (e.g., a high-power electric motor, etc.) disposed in tool housing 912, a control module (not shown) disposed in tool housing 912, battery receptacle or box 918, a power module (not shown) disposed in tool housing, trigger mechanism 921, and/or a switch module (not shown) disposed in tool housing. Electric motor 914, the control module, and battery receptacle or box 918, the power module, trigger mechanism 921, and/or the switch module may be substantially similar to electric motor 14, control module 16, and battery receptacle or box 18, power module 20, trigger mechanism 21, and switch mechanism 22, respectively, as shown and described in other embodiments of the present patent application.

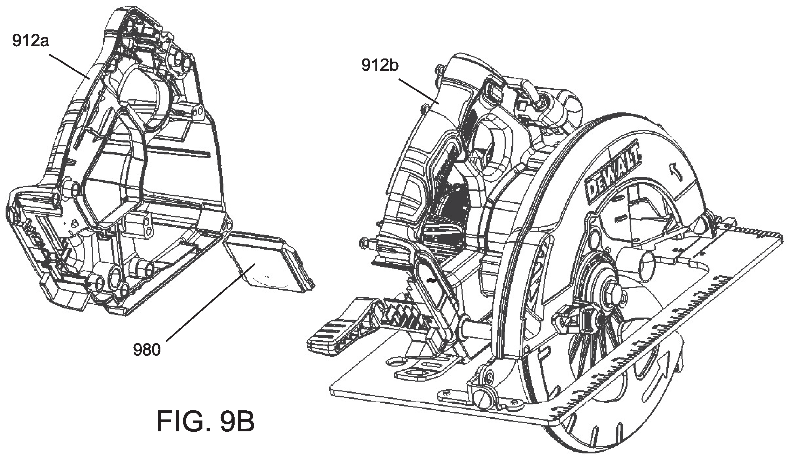

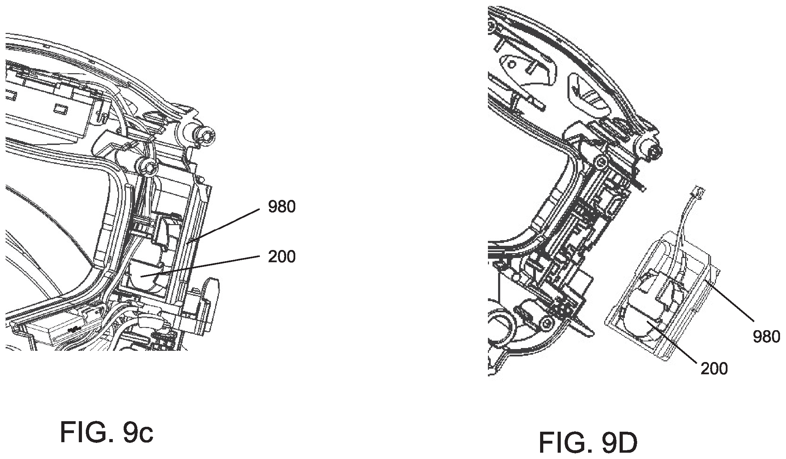

FIG. 9B depicts an exploded perspective view of power tool 900 of FIG. 9A including power source assembly 200 integrated into plate 980 of battery receptacle or box 918, according to some non-limiting embodiments or aspects. FIG. 9C depicts an enlarged partially perspective view of a portion of the power tool 900 of FIGS. 9A and 9B including power source assembly 200 integrated into plate 980 of battery receptacle or box 918, according to some non-limiting embodiments or aspects, and FIG. 9D depicts an enlarged partially perspective view of a portion of the power tool 900 of FIGS. 9A and 9B with a housing half removed and plate 980 including power source assembly 200 exploded therefrom, according to some non-limiting embodiments or aspects. FIGS. 9E-9G depict various perspective view of power source assembly 200 and plate 980, according to some non-limiting embodiments or aspects.

Referring to FIGS. 9A-9G, a housing clamshell structure of tool housing 812 (e.g., first housing portion 812a, second housing portion 812b, etc.) and plate 980 may form battery receptacle or box 918, including guide rails for receiving a battery pack, when first housing portion 912a and second housing portion 912b are mated or connected together with plate 980 therebetween. For example, plate 980 may be captured by the clamshell structure of tool housing 912 and form a partition surface that separates battery receptacle 918 from an internal structure of tool housing 912. In some non-limiting embodiments or aspects, plate 980 may be used as a potting boat for placement of a control or power module. An example of this arrangement can be found in U.S. Patent Application Publication No. 2024/0363945, which is incorporated herein by reference in its entirety. However, in this embodiment, plate 980 maintains a potting boat structure, but is used to house power source assembly 200. In particular, an inner surface of plate 980 that faces the interior of tool housing 912 may include a plurality of snap ribs 982 (e.g., four snap ribs 982, etc.) with chamfered surfaces that receive and support power source assembly 200 on plate 980.

Although embodiments have been described in detail for the purpose of illustration, it is to be understood that such detail is solely for that purpose and that the disclosure is not limited to the disclosed embodiments or aspects, but, on the contrary, is intended to cover modifications and equivalent arrangements that are within the spirit and scope of the appended claims. For example, it is to be understood that the present disclosure contemplates that, to the extent possible, one or more features of any embodiment or aspect can be combined with one or more features of any other embodiment or aspect.

## Claims

1. A power tool comprising:
a main housing;
an electric motor in the main housing;
a handle housing that extends from the main housing, wherein the handle housing includes a first handle portion that extends from a first end of the main housing, a second handle portion that extends from a second end of the main housing opposite the first end of the main housing, and a third handle portion that connects ends of the first handle portion and the second handle portion; and
a wireless communication assembly including:
a wireless communication module that includes a printed circuit board (PCB), wireless communication circuitry on the PCB, and a first connector on the PCB, wherein the first connector includes a pair of electrical contacts that is electrically coupled to the wireless communication circuitry; and
a power source assembly for providing a supply of electric power to the wireless communication module, wherein the power source assembly is electrically coupled to the pair of electrical contacts of the first connector via a pair of wires, and
wherein the wireless communication assembly is disposed in the handle housing.

2. The power tool of claim 1, wherein the second handle portion has a first cross-sectional area proximate the tool housing and a second cross-sectional area proximate the third handle portion,
wherein the first cross-sectional area is greater than the second cross-sectional area, and
wherein each of the wireless communication module and the power source assembly is disposed in the first cross-sectional area of the second handle portion.

3. The power tool of claim 2, wherein the handle housing including each of the first handle portion, the second handle portion, and the third handle portion includes a first housing portion and a second housing portion that are connected together along a mating plane to define an interior of the handle housing that includes the first cross-sectional area and the second cross-section area of the second handle portion,
wherein the wireless communication module is disposed in the first cross-sectional area of the second handle portion proximate a location of the second handle portion at which the interior of the second handle portion decreases from the first cross-sectional area to the second cross-sectional area,
wherein the power source assembly is disposed in the first cross-sectional area of the second handle portion proximate an end of the second handle portion that is connected to the main housing,
wherein the wireless communication module is located along a first plane within the second handle portion that is substantially orthogonal to the mating plane of the first housing portion and the second housing portion of the second handle portion,
wherein the power source assembly is located along a second plane within the second handle portion that is substantially orthogonal to the mating plane of the first housing portion and the second housing portion of the second handle portion, and
wherein the first plane is offset relative to the second plane.

4. The power tool of any preceding claim, wherein the first handle portion extends longitudinally from the main housing,
wherein the third handle portion extends at an angle less than 90 degrees from an end of the first handle portion back towards the main housing,
wherein the second handle portion connects the third handle portion to the main housing,
wherein the wireless communication module is disposed in the second handle portion, and
wherein the power source assembly is disposed in the third handle portion.

5. The power tool of claim 4, wherein the handle housing including each of the first handle portion, the second handle portion, and the third handle portion includes a first housing portion and a second housing portion that are connected together along a mating plane to define an interior of the handle housing,
wherein the wireless communication module is located along a first plane within the second handle portion that is substantially orthogonal to the mating plane of the first housing portion and the second housing portion of the second handle portion,
wherein the power source assembly is located along a second plane within the third handle portion that is substantially orthogonal to the mating plane of the first housing portion and the second housing portion of the third handle portion,
wherein the first plane is substantially parallel to a longitudinal axis of the second handle portion, and
wherein the second plane is substantially parallel to a longitudinal axis of the third handle portion.

6. The power tool of claim any preceding claim, wherein the third handle portion extends substantially perpendicularly to the first handle portion and the second handle portion,
wherein the power source assembly is disposed in the second handle portion adjacent a first wall of the second handle portion, and
wherein the wireless communication module is disposed in the second handle portion adjacent a second wall of the second housing portion opposite the first wall.

7. The power tool of claim 6, wherein the handle housing including each of the first handle portion, the second handle portion, and the third handle portion includes a first housing portion and a second housing portion that are connected together along a mating plane to define an interior of the handle housing,
wherein the wireless communication module is located along a first plane within the second handle portion that is substantially orthogonal to the mating plane of the first housing portion and the second housing portion of the second handle portion,
wherein the power source assembly is located along a second plane within the second handle portion that is substantially orthogonal to the mating plane of the first housing portion and the second housing portion of the second handle portion, and
wherein the first plane is offset relative to the second plane.

8. The power tool of claim 7, wherein the first plane and the second plane are at an angle of 15 to 30 degrees.

9. The power tool of any preceding claim, further comprising:
a battery receptacle including a terminal block that engages with a removable battery pack; and
a control module for supplying electric power from the removable battery pack to the electric motor,
wherein the wireless communication module further includes a second connector on the PCB,
wherein the second connector includes a plurality of electrical contacts that is electrically coupled to the wireless communication circuitry,
wherein the plurality of electrical contacts of the second connector is electrically coupled to the control module via a wiring harness, and
wherein the wireless communication module is configured to selectively receive power from the battery via the first connector or from the control module via the second connector.

10. The power tool of claim 9, further comprising:
a trigger mechanism;
a switch module operatively coupled to the trigger mechanism and the control module, wherein the switch module includes a switch that is actuated by the trigger mechanism to provide a signal to the control module to control a supply of electric power from the removable battery pack to the electric motor, and
wherein each of the trigger mechanism and the switch module is disposed in the handle housing.

11. The power tool of any preceding claim, further comprising:
a first retention assembly including:
one or more first beams that extend from an inner surface of the first housing portion in a first direction;
one or more second beams that extend from an inner surface of the second housing portion in a second direction opposite the first direction such that the one or more first beams and the one or more second beams extend toward each other with ends of the one or more first beams spaced apart from ends of the one or more second beams;
wherein the one or more first beams extend a first distance from the inner surface of the first housing portion in the first direction, wherein the one or more second beams extend from the inner surface of the second housing portion a second distance different than the first distance in the second direction opposite the first direction, and
wherein the wireless communication module is received in the first retention assembly between the one or more first beams and the one or more second beams.

12. The power tool of claim 11, further comprising:
a first abutment that extends from the inner surface of the first housing portion at a first side of the one or more first beams;
a second abutment that extends from the inner surface of the first housing portion at a second side opposite the first side of the one or more first beams,
wherein the first distance is less than the second distance, and
wherein the wireless communication module is received in the first retention assembly between the first abutment and the second abutment.

13. The power tool of claim 12, wherein ends of the one or more first beams include first notches that are configured for sliding engagement with an edge of the PCB, and wherein ends of the one or more second beams include second notches that are configured for sliding engagement with another edge of the PCB.

14. The power tool of any of claims 1 to 8, further comprising a battery receptacle including a terminal block that is configured to engage with a removable battery pack, wherein the wireless communication module is configured to selectively receive power from the removable battery or the power source assembly.

15. A power tool comprising:
a main housing;
an electric motor in the main housing;
a handle housing that extends from the main housing;
a plate; and
a power source assembly for providing a supply of power to a wireless communication module,
wherein the power source assembly is mounted on the plate,
wherein the handle housing includes a first housing portion and a second housing portion that are connected together along a mating plane with the plate between the first housing portion and the second housing portion to define an interior of the handle housing, and
wherein the first housing portion, the second housing portion, and the plate form a battery receptacle including a terminal block that engages with a removable battery pack with the first housing portion and the second housing portion connected together along the mating plane with the plate between the first housing portion and the second housing portion.
